# EUROPEAN PATENT APPLICATION

(11) **EP 4 787 979 A1**
(43) Date of publication of application: **05.08.2026**
(21) Application number: 23953819.2
(22) Date of filing: 28.09.2023
(51) Int. Cl.: H04W 52/48

(54) **POWER CONTROL METHOD, TERMINAL, AND NETWORK DEVICE**

(71) Applicant: Beijing Xiaomi Mobile Software Co., Ltd., Beijing 100085 (CN)
(72) Inventor: QIAO, Xuemei, Beijing 100085 (CN)
(74) Representative: Gunzelmann, Rainer
(86) International application number: PCT/CN2023/122987
(87) International publication number: WO 2025/065675

(57) **Abstract**

The present application provides a power control method, a terminal, and a network device. The method is executed by a terminal and comprises: determining to perform PRACH transmission including N preamble retransmissions, N being an integer greater than 1; and on the basis of the conditions of the N preamble retransmissions, determining whether to increase the power for PRACH retransmission. Thus, on the basis of the conditions of multiple preamble retransmissions, the terminal can determine whether or not to increase the power for PRACH retransmission, enabling reasonable power allocation and reducing the power consumption of the terminal.

## Description

### TECHNICAL FIELD

The present disclosure relates to the field of communication technologies, and in particular relates to a power control method, a terminal, and a network device.

### BACKGROUND

In related technologies, a power ramping mechanism for physical random access channel (PRACH) repetitions is proposed, which increases the transmission power by one level for each additional PRACH retransmission.

### SUMMARY

A power control method, a terminal, and a network device provided in embodiments of the present disclosure are used to solve the problem of how to control the power ramping of PRACH retransmissions when the terminal is performing a PRACH transmission with multiple preamble repetitions.

Embodiments of the present disclosure provide a power control method, a terminal, and a network device.

A first aspect of embodiments of the present disclosure provides a power control method, which is performed by a terminal and includes: determining to perform a PRACH transmission with *N* preamble repetitions, where *N* is an integer greater than 1; and determining whether to perform a power ramping of a PRACH retransmission based on a status of the *N* preamble repetitions.

In the above embodiments, the terminal may determine whether to perform the power ramping of the PRACH retransmission based on the status of multiple preamble repetitions, which may reasonably perform the power allocation to save the power consumption of the terminal.

A second aspect of embodiments of the present disclosure provides a power control method, which is performed by a network device and includes: sending first information to a terminal. The first information includes at least one of: first indication information, where the first indication information indicates that the terminal ramps a power of a PRACH retransmission in a case where at least one of *N* preamble repetitions is not cancelled; second indication information, where the second indication information indicates that the terminal keeps a power of a PRACH retransmission unchanged in a case where all of *N* preamble repetitions are cancelled; or configuration information, where the configuration information indicates a first value, the first value is used by the terminal to perform a power ramping of a PRACH retransmission in a case where *P* transmissions in *N* preamble repetitions are cancelled based on a first condition, where *P* is less than or equal to the first value, and the first value is an integer less than *N*; or the first value is used by the terminal to keep a power of a PRACH retransmission unchanged in a case where *Q* transmissions in the *N* preamble repetitions are cancelled based on a first condition, where *Q* is greater than the first value, and the first value is an integer less than *N*.

In the above embodiments, the terminal may determine whether to perform the power ramping of the PRACH retransmission based on the status of the *N* preamble repetitions, which may reasonably perform the power allocation to save the power consumption of the terminal.

A third aspect of embodiments of the present disclosure provides a terminal, which includes a processing module configured to determine to perform a PRACH transmission with *N* preamble repetitions, where *N* is an integer greater than 1, where the processing module is further configured to determine whether to perform a power ramping of a PRACH retransmission based on a status of the *N* preamble repetitions.

A fourth aspect of embodiments of the present disclosure provides a network device, which includes a transceiver module configured to send first information to a terminal. The first information includes at least one of: first indication information, where the first indication information indicates that the terminal ramps a power of a PRACH retransmission in a case where at least one of *N* preamble repetitions is not cancelled; second indication information, where the second indication information indicates that the terminal keeps a power of a PRACH retransmission unchanged in a case where all of *N* preamble repetitions are cancelled; or configuration information, where the configuration information indicates a first value, the first value is used by the terminal to perform a power ramping of a PRACH retransmission in a case where specific transmissions in *N* preamble repetitions are cancelled based on a first condition, where the number of the specific transmissions is less than or equal to the first value; or the first value is used by the terminal to keep a power of a PRACH retransmission unchanged in a case where specific transmissions in *N* preamble repetitions are cancelled based on a first condition, where the number of the specific transmissions is greater than the first value.

A sixth aspect of embodiments of the present disclosure provides a terminal, which includes: one or more processors; and a memory coupled to the one or more processors, and having stored therein instructions that, when executed by the one or more processors, cause the terminal to perform the method according to the first aspect.

A seventh aspect of embodiments of the present disclosure provides a network device, which includes: one or more processors; and a memory coupled to the one or more processors, and having stored therein instructions that, when executed by the one or more processors, cause the network device to perform the method according to the second aspect.

A seventh aspect of embodiments of the present disclosure provides a communication system, which includes a terminal configured to perform the method according to the first aspect, and a network device configured to perform the method according to the second aspect.

An eighth aspect of embodiments of the present disclosure provides a storage medium, which has stored therein instructions that, when run on a communication device, cause the communication device to perform the method according to the first aspect or the second aspect.

### BRIEF DESCRIPTION OF THE DRAWINGS

FIG. 1 is a schematic diagram of the architecture of a communication system provided in an embodiment of the present disclosure.
FIG. 2A is a schematic flowchart of a power control method provided in an embodiment of the present disclosure.
FIG. 2B is a schematic flowchart of another power control method provided in an embodiment of the present disclosure.
FIG. 2C is a schematic flowchart of yet another power control method provided in an embodiment of the present disclosure.
FIG. 2D is a schematic flowchart of yet another power control method provided in an embodiment of the present disclosure.
FIG. 3A is a schematic flowchart of yet another power control method provided in an embodiment of the present disclosure.
FIG. 3B is a schematic flowchart of yet another power control method provided in an embodiment of the present disclosure.
FIG. 3C is a schematic flowchart of yet another power control method provided in an embodiment of the present disclosure.
FIG. 4 is a schematic flowchart of yet another power control method provided in an embodiment of the present disclosure.
FIG. 5A is a schematic block diagram of a terminal provided in an embodiment of the present disclosure.
FIG. 5B is a schematic block diagram of a network device provided in an embodiment of the present disclosure.
FIG. 6A is a schematic block diagram of a communication device provided in an embodiment of the present disclosure.
FIG. 6B is a schematic block diagram of a chip provided in an embodiment of the present disclosure.

### DETAILED DESCRIPTION

Embodiments of the present disclosure provide a power control method, a terminal, and a network device.

In a first aspect, embodiments of the present disclosure provide a power control method, which is performed by a terminal and includes: determining to perform a PRACH transmission with *N* preamble repetitions, where *N* is an integer greater than 1; and determining whether to perform a power ramping of a PRACH retransmission based on a status of the *N* preamble repetitions.

In the above embodiments, the terminal may determine whether to perform the power ramping of the PRACH retransmission based on the status of multiple preamble repetitions, which may reasonably perform the power allocation to save the power consumption of the terminal.

In conjunction with some embodiments of the first aspect, in some embodiments, determining, by the terminal, whether to perform the power ramping based on the status of the *N* preamble repetitions includes: determining, according to a protocol agreement, that at least one of the *N* preamble repetitions is not cancelled, and determining to perform the power ramping of the PRACH retransmission; or determining, according to a protocol agreement, that all of the *N* preamble repetitions are cancelled, and determining to keep the power of the PRACH retransmission unchanged.

In the above embodiments, the terminal may determine to perform the power ramping of the PRACH retransmission in the case where at least one of the *N* preamble repetitions is not cancelled according to the protocol agreement, and determine to keep the power of the PRACH retransmission unchanged in the case where all of the *N* preamble repetitions are cancelled, which may reasonably perform the power allocation to save the power consumption of the terminal.

In conjunction with some embodiments of the first aspect, in some embodiments, determining whether to perform the power ramping based on the status of the *N* preamble repetitions comprises: receiving first indication information sent by a network device, where the first indication information indicates that the terminal ramps the power of the PRACH retransmission in a case where at least one of the *N* preamble repetitions is not cancelled; and determining, based on the first indication information and a case that the *N* preamble repetitions are cancelled, to perform the power ramping of the PRACH retransmission in a case where at least one of the *N* preamble repetitions is not cancelled.

In the above embodiments, the terminal may determine to perform the power ramping of the PRACH retransmission in the case where at least one of the *N* preamble repetitions is not cancelled according to the first indication information from the network device, which may reasonably perform the power allocation to save the power consumption of the terminal.

In conjunction with some embodiments of the first aspect, in some embodiments, determining whether to perform the power ramping based on the status of the *N* preamble repetitions includes: receiving second indication information sent by a network device, where the second indication information indicates that the terminal keeps the power of the PRACH retransmission unchanged in a case where all of the *N* preamble repetitions are cancelled; and determining, based on the second indication information and a case where the *N* preamble repetitions are cancelled, to keep the power of the PRACH retransmission unchanged in a case where all of the *N* preamble repetitions are cancelled.

In the above embodiments, the terminal may determine to keep the power of the PRACH retransmission unchanged in the case where all of the *N* preamble repetitions are cancelled according to the first indication information from the network device, which may reasonably perform the power allocation to save the power consumption of the terminal.

In conjunction with some embodiments of the first aspect, in some embodiments, determining whether to perform the power ramping based on the status of the *N* preamble repetitions includes: determining that at least one of the *N* preamble repetitions is cancelled based on a first condition, and determining to keep the power of the PRACH retransmission unchanged.

In the above embodiments, the terminal may determine to keep the power of the PRACH retransmission unchanged in the case where at least one of the *N* preamble repetitions is cancelled based on a first condition, which may reasonably perform the power allocation to save the power consumption of the terminal.

In conjunction with some embodiments of the first aspect, in some embodiments, determining whether to perform the power ramping based on the status of the *N* preamble repetitions includes: determining that *P* transmissions in the *N* preamble repetitions are cancelled based on a first condition, and determining to perform the power ramping of the PRACH retransmission, where *P* is an integer less than or equal to a first value, and the first value is an integer less than *N*; or determining that *Q* transmissions in the *N* preamble repetitions are cancelled based on a first condition, and determining to keep the power of the PRACH retransmission unchanged, where *Q* is an integer greater than a first value, and the first value is an integer less than *N*.

In the above embodiments, the terminal may determine to perform the power ramping of the PRACH retransmission in the case where specific transmissions in *N* preamble repetitions are cancelled based on a first condition, where the number of the specific transmissions is less than or equal to the first value; and may determine to keep the power of the PRACH retransmission unchanged in the case where specific transmissions in *N* preamble repetitions are cancelled based on a first condition, where the number of the specific transmissions is greater than the first value, which may reasonably perform the power allocation to save the power consumption of the terminal.

In conjunction with some embodiments of the first aspect, in some embodiments, the method further includes as follows: the first value is specified by a protocol or configured by a network device.

In the above embodiments, the terminal may determine the first value according to the protocol agreement or according to the configuration information from the network device, so as to determine whether to perform the power ramping of the PRACH retransmission based on the first value and the status of the *N* preamble repetitions.

In conjunction with some embodiments of the first aspect, in some embodiments, the first condition includes at least one of: a resource collision, a reduction in a transmission power caused by a power allocation, or a transmission cancellation due to a power allocation.

In conjunction with some embodiments of the first aspect, in some embodiments, the resource collision includes at least one of: a preamble transmission and uplink transmissions other than the preamble transmission being scheduled in the same time slot, an interval between a preamble transmission and uplink transmissions other than the preamble transmission not meeting a specific condition, a preamble transmission and downlink transmissions other than the preamble transmission overlapping in a time domain in a time division duplex (TDD) band, a preamble transmission and downlink symbol transmissions other than the preamble transmission overlapping in a time domain in a TDD band, or for a half-duplex frequency division duplex (HD-FDD) terminal, a preamble transmission and downlink transmissions other than the preamble transmission overlapping in a time domain.

In conjunction with some embodiments of the first aspect, in some embodiments, the uplink transmissions other than the preamble transmission include at least one of: a physical uplink control channel (PUCCH) transmission, a physical uplink shared channel (PUSCH) transmission, or a scheduling request (SR) transmission.

In conjunction with some embodiments of the first aspect, in some embodiments, the downlink transmissions other than the preamble transmission include at least one of: a physical downlink control channel (PDCCH) transmission, a physical downlink shared channel (PDSCH) transmission, or a channel status information-reference signal (CSI-RS) transmission.

In second aspect, embodiments of the present disclosure provide a power control method, which is performed by a network device and includes: sending first information to a terminal. The first information includes at least one of: first indication information, where the first indication information indicates that the terminal ramps a power of a PRACH retransmission in a case where at least one of *N* preamble repetitions is not cancelled; second indication information, where the second indication information indicates that the terminal keeps a power of a PRACH retransmission unchanged in a case where all of *N* preamble repetitions are cancelled; or configuration information, where the configuration information indicates a first value, the first value is used by the terminal to perform a power ramping of a PRACH retransmission in a case where *P* transmissions in *N* preamble repetitions are cancelled based on a first condition, where *P* is less than or equal to the first value, and the first value is an integer less than *N*; or the first value is used by the terminal to keep a power of a PRACH retransmission unchanged in a case where *Q* transmissions in the *N* preamble repetitions are cancelled based on a first condition, where *Q* is greater than the first value, and the first value is an integer less than *N*.

In the above embodiments, the terminal may determine whether to perform the power ramping of the PRACH retransmission based on the status of the *N* preamble repetitions, which may reasonably perform the power allocation to save the power consumption of the terminal.

In conjunction with some embodiments of the second aspect, in some embodiments, the first condition includes at least one of: a resource collision, a reduction in a transmission power caused by a power allocation, or a transmission cancellation due to a power allocation.

In conjunction with some embodiments of the second aspect, in some embodiments, the resource collision includes at least one of: a preamble transmission and uplink transmissions other than the preamble transmission being scheduled in the same time slot, an interval between a preamble transmission and uplink transmissions other than the preamble transmission not meeting a specific condition, a TDD band a preamble transmission and downlink transmissions other than the preamble transmission overlapping in a time domain, a preamble transmission and downlink symbol transmissions other than the preamble transmission overlapping in a time domain in a TDD band, or for an HD-FDD terminal, a preamble transmission and downlink transmissions other than the preamble transmission overlapping in a time domain.

In conjunction with some embodiments of the first aspect, in some embodiments, the uplink transmissions other than the preamble transmission include at least one of: a PUCCH transmission, a PUSCH transmission, or an SR transmission.

In conjunction with some embodiments of the first aspect, in some embodiments, the downlink transmissions other than the preamble transmission include at least one of: a PDCCH transmission, a PDSCH transmission, or a CSI-RS transmission.

In a third aspect, embodiments of the present disclosure provide a terminal, which includes at least one of a transceiver module or a processing module, where the terminal is configured to perform an optional implementation of the first aspect.

In a fourth aspect, embodiments of the present disclosure provide a network device, which includes at least one of a transceiver module or a processing module, where the network device is configured to perform an optional implementation of the second aspect.

In a fifth aspect, embodiments of the present disclosure provide a terminal, which includes: one or more processors; and a memory coupled to the one or more processors, and having stored therein instructions that, when executed by the one or more processors, cause the terminal to perform an optional implementation of the first aspect.

In a sixth aspect, embodiments of the present disclosure provide a network device, which includes: one or more processors; and a memory coupled to the one or more processors, and having stored therein instructions that, when executed by the one or more processors, cause the network device to perform an optional implementation of the second aspect.

In a seventh aspect, embodiments of the present disclosure provide a communication system, which includes a terminal configured to perform the method described in an optional implementation of the first aspect, and a network device configured to perform the method described in an optional implementation of the second aspect.

In an eighth aspect, embodiments of the present disclosure provide a storage medium, which has stored therein instructions that, when run on a communication device, cause the communication device to perform the methods described in an optional implementation of the first aspect and an optional implementation of the second aspect.

In a ninth aspect, embodiments of the present disclosure provide a program product that, when executed by a communication device, causes the communication device to perform the methods described in an optional implementation of the first aspect and an optional implementation of the second aspect.

In a tenth aspect, embodiments of the present disclosure provide a computer program that, when run on a computer, causes the computer to perform the methods described in an optional implementation of the first aspect and an optional implementation of the second aspect.

In an eleventh aspect, embodiments of the present disclosure provide a chip or chip system. The chip or chip system includes a processing circuitry configured to perform the methods described in an optional implementation of the first aspect and an optional implementation of the second aspect.

It may be understood that the terminal, the network device, the communication system, the storage medium, the program product, the computer program, and the chip or chip system which are mentioned above are all configured to execute the methods provided in the embodiments of the present disclosure. Therefore, regarding the beneficial effects they may achieve, reference may be made to the beneficial effects of the corresponding methods, which will not be repeated here.

Embodiments of the present disclosure provide a power control method, a terminal, and a network device. In some embodiments, terms such as a power control method, an information processing method, and a communication method may be used interchangeably.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a," "an," "the," "above," "said," "above-mentioned," "this," or the like, may mean "one and only one," "one or more," "at least one," or the like. For example, when an article such as "a," "an," and "the" in English in translation is used, the noun following the article may be understood as a singular expression or a plural expression.

In the embodiments of the present disclosure, "a plurality of" refers to two or more.

In some embodiments, terms such as "at least one of," "one or more," "a plurality of," "multiple," and the like may be used interchangeably.

In some embodiments, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably; and terms such as "less than," "less than or equal to," "not greater than," "smaller than," "smaller than or equal to," "not more than," "lower than," "lower than or equal to," "not higher than," and "below" may be used interchangeably.

In some embodiments, devices and the like may be interpreted as being physical or virtual, and their names are not limited to the names described in the embodiments. Terms such as "apparatus," "equipment," "device," "circuit," "network element," "node," "function," "unit," "section," "system," "network," "chip," "chip system," "entity," and "body" may be used interchangeably.

In some embodiments, the "network" may be interpreted as devices included in the network, e.g., an access network device, a core network device, or the like.

In some embodiments, terms such as "access network device (AN device)," "radio access network device (RAN device)," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "serving cell," "carrier," "component carrier," and "bandwidth part (BWP)" may be used interchangeably.

In some embodiments, terms such as terminal, terminal device, user equipment (UE), user terminal, mobile station (MS), mobile terminal (MT), subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, and client may be used interchangeably.

In some embodiments, an access network device, a core network device, or a network device may be replaced by a terminal. For example, the various embodiments of the present disclosure may also be applied to a structure in which the communication between a terminal and an access network device, a core network device, or a network device is replaced by the communication between multiple terminals (for example, device-to-device (D2D) communication, vehicle-to-everything (V2X) communication, or the like). In this case, the terminal may be configured to have all or some of the functions of the access network device. Furthermore, the words such as "uplink" and "downlink" may be replaced with words corresponding to an inter-terminal communication (e.g., "side"). For example, an uplink channel, a downlink channel, and the like may be replaced by a side channel, and an uplink, a downlink, and the like may be replaced by a side link.

In some embodiments, the terminal may be replaced by an access network device, a core network device, or a network device. In this case, the access network device, the core network device, or the network device may also be configured to have all or some of the functions of the terminal.

In some embodiments, obtaining data, information, and the like may comply with the laws and regulations of the country where the data, information, and the like are obtained.

In some embodiments, data, information, and the like may be obtained with the consent of the user.

In some embodiments, when the network device is a location management function (LMF), the information exchange between the terminal and the network device may be performed via an access and mobility management function (AMF).

In some embodiments, when the network device is an LMF, the information exchange between the terminal and the network device may be performed via an AMF and an access network device.

In addition, each element, each row, or each column in the table in the embodiments of the present disclosure may be implemented as an independent embodiment, and the combination of any elements, any rows, and any columns may also be implemented as an independent embodiment.

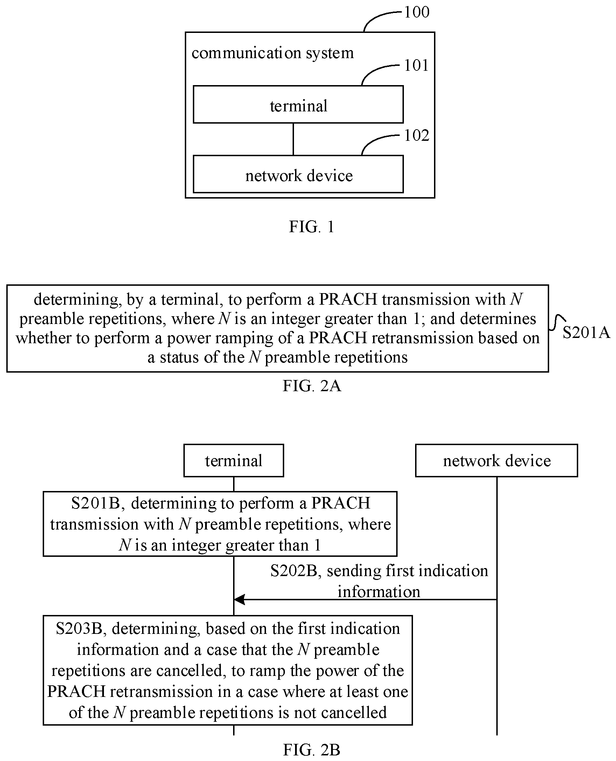

FIG. 1 is a schematic diagram of the architecture of a communication system provided in an embodiment of the present disclosure.

As shown in FIG. 1, the communication system 100 may include a terminal 10 and a network device 20.

In some embodiments, for example, the terminal 10 includes, but is not limited to, at least one of: a mobile phone, a wearable device, an Internet of Things device, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, or a wireless terminal in a smart home.

In some embodiments, the network device 20 may include at least one of an access network device or a core network device.

In some embodiments, the access network device is, for example, a node or device that connects the terminal to a wireless network. The access network device may include, but is not limited to, at least one of: an evolved Node B (eNB), a next generation eNB (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), or a mobile switching center in a 5G communication system; a base station, an open radio access network (Open RAN), or a cloud RAN (Cloud RAN) in a 6G communication system; base stations in other communication systems; or an access node in a wireless fidelity (Wi-Fi) system.

In some embodiments, the core network device may be a single device including a first network function, a second network function and the like, or may be multiple devices or a group of devices, each including all or some of a first network function, a second network function and the like. The network functions may be virtual or physical. The core network includes, for example, at least one of an evolved packet core (EPC), a 5G core network (5GCN), or a next generation core (NGC).

In some embodiments, the first network function is, for example, an access and mobility management function (AMF).

In some embodiments, the first network function is used for the access control and mobility management of the terminal accessing to the network of an operator, such as functions including mobility state management, allocation of temporary identities of users, authentication and authorization of users, and the like, and their names are not limited thereto.

It may be understood that the communication system described in the embodiments of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new service scenarios, the technical solution provided in the embodiments of the present disclosure is also applicable to similar technical problems.

The following embodiments of the present disclosure may be applied to the communication system 100 shown in FIG. 1, or to some entities thereof, but are not limited thereto.

The entities shown in FIG. 1 are illustrative. The communication system 100 may include all or some of the entities in FIG. 1, or the communication system may include other entities outside in FIG. 1. The number and form of individual entities are arbitrary. The entities may be physical or virtual. The connection relationship between the entities is illustrative. The entities may not be connected to each other, or may be connected to each other in any way. The connection may be direct or indirect, and may be wired or wireless.

The embodiments of the present disclosure may be applied to long term evolution (LTE) systems, LTE-advanced (LTE-A) systems, LTE-beyond (LTE-B) systems, SUPER 3G systems, international mobile telecommunications-advanced (IMT-Advanced) systems, 4G mobile communication systems, 5G mobile communication systems, 5G new radio (NR) systems, future radio access (FRA) systems, new-radio access technology (RAT) systems, new radio (NR) systems, new radio access (NX) systems, future generation radio access (FX) systems, global system for mobile communications (GSM), CDMA2000, ultra mobile broadband (UMB) systems, IEEE 802.11 (Wi-Fi), IEEE 802.16 (WiMAX), IEEE 802.20, ultra-wideband (UWB), Bluetooth (a registered trademark), PLMN networks, D2D systems, machine-to-machine (M2M) systems, IoT systems, V2X systems, systems utilizing other communication methods, next-generation systems built upon them, and the like. In addition, multiple systems may also be combined (for example, a combination of 5G and LTE or LTE-A, or the like) for application.

In related technologies, a PRACH transmission procedure is proposed, which is a PRACH transmission with multiple preamble repetitions. For the power ramping of a PRACH retransmission, it is needed to determine how to control the power ramping of PRACH retransmissions when a terminal is performing a PRACH transmission with multiple preamble repetitions. This is an urgent problem to be solved.

Based on this, embodiments of the present disclosure provide a power control method, a terminal, and a network device. The method performed by the terminal includes: determining to perform a PRACH transmission with *N* preamble repetitions, where *N* is an integer greater than 1; and determining whether to perform a power ramping of a PRACH retransmission based on a status of the *N* preamble repetitions. Therefore, the terminal may determine whether to perform the power ramping of the PRACH retransmission based on the status of multiple preamble repetitions, which may reasonably perform the power allocation to save the power consumption of the terminal.

FIG. 2A is a flowchart illustrating a power control method according to an embodiment of the present disclosure. As shown in FIG. 2A, embodiments of the present disclosure relate to a power control method, which includes the following step.

At step S201A, a terminal determines to perform a PRACH transmission with *N* preamble repetitions, where *N* is an integer greater than 1; and determines whether to perform a power ramping of a PRACH retransmission based on a status of the *N* preamble repetitions.

It may be understood that for multiple PRACH transmissions with *N* preamble repetitions, the terminal may send *N* preambles simultaneously in a single PRACH transmission, where *N* is an integer greater than 1, and the *N* preambles may be the same or different.

It may also be understood that if the terminal determines to perform a PRACH retransmission, the terminal may send *N* preambles simultaneously in a single PRACH retransmission again. The *N* preambles may be the same or different.

In the embodiments of the present disclosure, the terminal determines to perform a PRACH transmission with *N* preamble repetitions, and determines whether to perform a power ramping of a PRACH retransmission when performing a PRACH retransmission based on a status of the *N* preamble repetitions.

In some embodiments, the status of the *N* preamble repetitions includes at least one of: all of the *N* preamble repetitions being successful, all of the *N* preamble repetitions being cancelled, all of the *N* preamble repetitions failing, at least one of the *N* preamble repetitions being cancelled, at least one of the *N* preamble repetitions being successful, or at least one of the *N* preamble repetitions failing.

In some embodiments, at least one of the *N* preamble repetitions being cancelled includes at least one of: at least one of the *N* preamble repetitions being cancelled due to overlapping with a specific uplink transmission in a time domain, at least one of the *N* preamble repetitions being cancelled due to overlapping with a specific downlink transmission in a time domain, at least one of the *N* preamble repetitions being cancelled because it is scheduled to be transmitted in the same time slot as a specific uplink transmission, at least one of the *N* preamble repetitions being cancelled because the interval between it and a specific uplink transmission does not meet a specific condition, at least one of the *N* preamble repetitions being cancelled due to the reduction in the transmission power caused by the power allocation, or at least one of the *N* preamble repetitions being cancelled due to the power allocation.

In some embodiments, the specific uplink transmission includes at least one of an uplink channel transmission or an uplink signal transmission, and the specific downlink transmission includes at least one of a downlink channel transmission or a downlink signal transmission.

In some embodiments, the specific uplink transmission includes at least one of a PUCCH transmission, a PUSCH transmission, or an SR transmission.

In some embodiments, the specific downlink transmission includes at least one of a PDCCH transmission, a PDSCH transmission, or a CSI-RS transmission.

In some embodiments, the power of the PRACH retransmission is the same as the transmission power of the PRACH retransmission.

In some embodiments, the terminal determines, based on the status of the *N* preamble repetitions, to perform the power ramping of the PRACH retransmission in the case where at least one of the *N* preamble repetitions is not cancelled.

In some embodiments, the terminal determines, based on the status of the *N* preamble repetitions, to keep the power of the PRACH retransmission unchanged in the case where all of the *N* preamble repetitions are cancelled.

In some embodiments, determining, by the terminal, whether to perform the power ramping based on the status of the *N* preamble repetitions includes: determining, according to a protocol agreement, that at least one of the *N* preamble repetitions is not cancelled, and determining to perform the power ramping of the PRACH retransmission; or determining, according to a protocol agreement, that all of the *N* preamble repetitions are cancelled, and determining to keep the power of the PRACH retransmission unchanged.

In an embodiment of the present disclosure, the terminal may determine that at least one of the *N* preamble repetitions is not cancelled, and determines to perform the power ramping of the PRACH retransmission, according to the protocol agreement.

In an embodiment of the present disclosure, the terminal may determine that all of the *N* preamble repetitions are cancelled, and determines to keep the power of the PRACH retransmission unchanged, according to the protocol agreement.

In some embodiments, based on the indication from the network device, the terminal determines that at least one of the *N* preamble repetitions is not cancelled, and determines to perform the power ramping of the PRACH retransmission in the case where the network device indicates, to the terminal, that at least one of the *N* preamble repetitions is not cancelled, and to perform the power ramping of the PRACH retransmission. Alternatively, based on the indication from the network device, the terminal determines that all of the *N* preamble repetitions are cancelled, and determines to keep the power of the PRACH retransmission unchanged in the case where the network device indicates, to the terminal, that all of the *N* preamble repetitions are cancelled, and to keep the power of the PRACH retransmission unchanged.

In some embodiments, the terminal sends a request message to the network device, requesting the network device to send the above-mentioned indication, and then determines that at least one of the *N* preamble repetitions is not cancelled and determines to perform the power ramping of the PRACH retransmission, based on the indication from the network device; or determines that all of the *N* preamble repetitions are cancelled and determines to keep the power of the PRACH retransmission unchanged, based on the indication from the network device.

In some embodiments, the network device may reuse the existing signaling or message to send the above-mentioned indication to the terminal, or use a new signaling or message to send the above-mentioned indication to the terminal.

In some embodiments, the terminal may reuse the existing signaling or message to send the above-mentioned request message to the network device, or use a new signaling or message to send the above-mentioned request message to the network device.

In some embodiments, determining, by the terminal, whether to perform the power ramping based on the status of the *N* preamble repetitions includes: determining that at least one of the *N* preamble repetitions is cancelled based on a first condition, and determining to keep the power of the PRACH retransmission unchanged.

In the embodiments of the present disclosure, in the case where the terminal determines that at least one of the *N* preamble repetitions is cancelled based on a first condition, the terminal may keep the power of the PRACH retransmission unchanged.

In some embodiments, determining, by the terminal, whether to perform the power ramping based on the status of the *N* preamble repetitions includes: determining that *P* transmissions in the *N* preamble repetitions are cancelled based on a first condition, and determining to perform the power ramping of the PRACH retransmission, where *P* is an integer less than or equal to a first value, and the first value is an integer less than *N*; or determining that *Q* transmissions in the *N* preamble repetitions are cancelled based on a first condition, and determining to keep the power of the PRACH retransmission unchanged, where *Q* is an integer greater than a first value, and the first value is an integer less than *N*.

In an embodiment of the present disclosure, the terminal determines to perform the power ramping of the PRACH retransmission in the case where the terminal determines that *P* transmissions in the *N* preamble repetitions are cancelled based on a first condition, and *P* is an integer less than or equal to a first value, where the first value is an integer less than *N*.

For example, *N* is 8, the first value is 4, *P* is 2, and *P* is less than the first value. In the case where the terminal determines that two of the eight preamble repetitions are cancelled based on the first condition, the terminal determines to perform the power ramping of the PRACH retransmission.

In an embodiment of the present disclosure, the terminal determines to keep the power of the PRACH retransmission unchanged in the case where the terminal determines that *Q* transmissions in the *N* preamble repetitions are cancelled based on a first condition, and *Q* is an integer greater than a first value, where the first value is an integer less than *N*.

For example, *N* is 8, the first value is 4, *Q* is 6, and the terminal determines to keep the power of the PRACH retransmission unchanged in the case where the terminal determines that six of the eight preamble repetitions are cancelled based on the first condition.

In some embodiments, the terminal determines the first value based on a protocol agreement or based on an indication from the network device.

In some embodiments, the first value is *N*/2.

In some embodiments, the first value is *N* minus an offset value.

In some embodiments, the terminal determines the offset value based on a protocol agreement or based on an indication from the network device.

In some embodiments, the first condition includes at least one of: a resource collision, a reduction in a transmission power caused by a power allocation, or a transmission cancellation due to a power allocation.

In some embodiments, in the case where the terminal determines that at least one of the *N* preamble repetitions is cancelled due to a resource collision, the terminal keeps the power of the PRACH retransmission unchanged.

In some embodiments, in the case where the terminal determines that at least one of the *N* preamble repetitions is cancelled due to the reduction in the transmission power caused by the power allocation, the terminal keeps the power of the PRACH retransmission unchanged.

In some embodiments, in the case where the terminal determines that at least one of the *N* preamble repetitions is cancelled due to the power allocation, the terminal keeps the power of the PRACH retransmission unchanged.

In some embodiments, the terminal ramps the power of the PRACH retransmission in the case where the terminal determines that specific transmissions in the *N* preamble repetitions are cancelled due to a resource collision, where the number of the specific transmissions is less than or equal to a first value, and the first value is an integer less than *N*; or the terminal keeps the power of the PRACH retransmission unchanged in the case where the terminal determines that specific transmissions in the *N* preamble repetitions are cancelled due to a resource collision, where the number of the specific transmissions is greater than a first value, and the first value is an integer less than *N*.

In some embodiments, the terminal ramps the power of the PRACH retransmission in the case where the terminal determines that specific transmissions in the *N* preamble repetitions are cancelled due to the reduction in the transmission power caused by the power allocation, where the number of the specific transmissions is less than or equal to a first value, and the first value is an integer less than *N*; or the terminal keeps the power of the PRACH retransmission unchanged in the case where the terminal determines that specific transmissions in the *N* preamble repetitions are cancelled due to the reduction in the transmission power caused by the power allocation, where the number of the specific transmissions is greater than a first value, and the first value is an integer less than *N*.

In some embodiments, the terminal ramps the power of the PRACH retransmission in the case where the terminal determines that specific transmissions in the *N* preamble repetitions are cancelled due to the power allocation, where the number of the specific transmissions is less than or equal to a first value, and the first value is an integer less than *N*; or the terminal keeps the power of the PRACH retransmission unchanged in the case where the terminal determines that specific transmissions in the *N* preamble repetitions are cancelled due to the power allocation, where the number of the specific transmissions is greater than a first value, and the first value is an integer less than *N*.

In some embodiments, the resource collision includes at least one of: a preamble transmission and uplink transmissions other than the preamble transmission being scheduled in the same time slot, an interval between the preamble transmission and uplink transmissions other than the preamble transmission not meeting a specific condition, a preamble transmission and downlink transmissions other than the preamble transmission overlapping in a time domain in a time division duplex (TDD) band, a preamble transmission and downlink symbol transmissions other than the preamble transmission overlapping in a time domain in a TDD band, or for a half-duplex frequency division duplex (HD-FDD) terminal, a preamble transmission and downlink transmissions other than the preamble transmission overlapping in a time domain.

In some embodiments, in the case where the terminal determines that at least one of the *N* preamble repetitions is cancelled due to the preamble transmission and uplink transmissions other than the preamble transmission being scheduled in the same time slot, the terminal keeps the power of the PRACH retransmission unchanged.

In some embodiments, in the case where the terminal determines that at least one of the *N* preamble repetitions is cancelled due to an interval between the preamble transmission and uplink transmissions other than the preamble transmission not meeting a specific condition, the terminal keeps the power of the PRACH retransmission unchanged.

In some embodiments, in the case where the terminal determines that at least one of the *N* preamble repetitions is cancelled due to the preamble transmission and downlink transmissions other than the preamble transmission overlapping in a time domain in a TDD band, the terminal keeps the power of the PRACH retransmission unchanged.

In some embodiments, in the case where the terminal determines that at least one of the *N* preamble repetitions is cancelled due to the preamble transmission and downlink symbol transmissions other than the preamble transmission overlapping in a time domain in a TDD band, the terminal keeps the power of the PRACH retransmission unchanged.

In some embodiments, in the case where the terminal determines that at least one of the *N* preamble repetitions is cancelled due to the preamble transmission and downlink transmissions other than the preamble transmission overlapping in a time domain for an HD-FDD terminal, the terminal keeps the power of the PRACH retransmission unchanged.

In some embodiments, the uplink transmissions other than the preamble transmission include at least one of: a PUCCH transmission, a PUSCH transmission, or an SR transmission.

In some embodiments, the downlink transmissions other than the preamble transmission include at least one of: a PDCCH transmission, a PDSCH transmission, or a CSI-RS transmission.

In some embodiments, the preamble transmission and the downlink symbol transmissions other than the preamble transmission overlapping in the time domain in the TDD band includes at least one of: an effective random access channel occasion (RO) of the preamble transmission overlapping with the PDCCH in the time domain, an effective RO of the preamble transmission overlapping with a semi-persistent-scheduling (SPS) PDSCH in the time domain, an effective RO of the preamble transmission overlapping with an SPS CSI-RS in the time domain, or an effective RO of the preamble transmission overlapping with a downlink symbol indicated by the network device via a cell-specific upper-layer signaling or a terminal-specific upper-layer signaling in the time domain.

In some embodiments, for the HD-FDD terminal, the preamble transmission and the downlink transmissions other than the preamble transmission overlapping in the time domain includes at least one of: an effective RO of the preamble transmission overlapping with a common search space (CSS) in the time domain, an effective RO of the preamble transmission overlapping with a UE-specific search space (USS) PDCCH in the time domain, an effective RO of the preamble transmission overlapping with an SPS PDSCH in the time domain, an effective RO of the preamble transmission overlapping with a CSI-RS in the time domain, an effective RO of the preamble transmission overlapping with a downlink PRS in the time domain, an effective RO of the preamble transmission overlapping with a dynamic grant (DG) PDSCH in the time domain, an effective RO of the preamble transmission overlapping with a synchronization signal and physical broadcast channel block (SSB) in the time domain, a handover time interval between an effective RO of the preamble transmission and an SSB incapable of being guaranteed by scheduling, or a handover time interval between an effective RO of the preamble transmission and a CSS PDCCH incapable of being guaranteed by scheduling.

In some embodiments, the names of information and the like are not limited to the names described in the embodiments. Terms such as "information," "message," "signal," "signaling," "report," "configuration," "indication," "instruction," "command," "channel," "parameter," "domain," "field," "symbol," "code element," "codebook," "codeword," "codepoint," "bit," "data," "program," and "chip" may be used interchangeably.

In some embodiments, terms such as "uplink," "up-link," and "physical uplink" may be used interchangeably; terms such as "downlink," "down-link," and "physical downlink" may be used interchangeably; and terms such as "sidelink," "side-link," "sidelink communication," "side-link communication," "direct connection," "direct link," "direct communication," and "direct link communication" may be used interchangeably.

In some embodiments, terms such as "downlink control information (DCI)," "downlink (DL) assignment," "DL DCI," "uplink (UL) grant," and "UL DCI" may be used interchangeably.

In some embodiments, terms such as "physical downlink shared channel (PDSCH)" and "DL data" may be used interchangeably, and terms such as "physical uplink shared channel (PUSCH)" and "UL data" may be used interchangeably.

In some embodiments, terms such as "search space," "search space set," "search space configuration," "search space set configuration," "control resource set (CORESET)," and "CORESET configuration" may be used interchangeably.

In some embodiments, terms such as "synchronization signal (SS)," "synchronization signal block (SSB)," "reference signal (RS)," "pilot," and "pilot signal" may be used interchangeably.

In some embodiments, "acquiring," "obtaining," "getting," "receiving," "transmitting," "bidirectional transmission," and "sending and/or receiving" may be used interchangeably, and may be interpreted as receiving from other entities, obtaining from protocols, obtaining from higher layers, obtaining by self-processing, autonomously implementing, or other meanings.

In some embodiments, terms such as "sending," "emitting," "reporting," "issuing," "transmitting," "bidirectional transmission," and "sending and/or receiving" may be used interchangeably.

In some embodiments, terms such as "certain," "preset," "predetermined," "set," "indicated," "particular," "any," and "first" may be used interchangeably. "A certain A," "a preset A," "a predetermined A," "a set A," "an indicated A," "a particular A," "any A," and "a first A" may be interpreted as A predefined in a protocol or the like, or as A obtained by setting, configuration, indication or the like, or as a specific A, a certain A, any A, a first A or the like, but are not limited thereto.

By implementing the embodiments of the present disclosure, the terminal determines to perform a PRACH transmission with *N* preamble repetitions, where *N* is an integer greater than 1; and determines whether to perform a power ramping of a PRACH retransmission based on a status of the *N* preamble repetitions. Therefore, the terminal may determine whether to perform the power ramping of the PRACH retransmission based on the status of multiple preamble repetitions, which may reasonably perform the power allocation to save the power consumption of the terminal.

FIG. 2B is a flowchart illustrating a power control method according to an embodiment of the present disclosure. As shown in FIG. 2B, embodiments of the present disclosure relate to a power control method, which includes the following steps.

At step S201B, a terminal determines to perform a PRACH transmission with *N* preamble repetitions, where *N* is an integer greater than 1.

Regarding the optional implementation of S201B, reference may be made to the optional implementation of S201A in FIG. 2A and other related parts in the embodiments involved in FIG. 2A, which will not be repeated here.

At step S202B, a network device sends first indication information to the terminal.

In some embodiments, the first indication information indicates that the terminal ramps the power of the PRACH retransmission in a case where at least one of the *N* preamble repetitions is not cancelled.

In some embodiments, the network device may reuse the existing signaling or message to send the first indication information to the terminal, or use a new signaling or message to send the first indication information to the terminal.

In some embodiments, the network device sends the first indication information to the terminal autonomously, or sends the first indication information to the terminal in the case where a specific condition is met.

For example, in the case where the network device receives a request message from the terminal, the network device sends the first indication information to the terminal.

At step S203B, the terminal determines, based on the first indication information and a case that the *N* preamble repetitions are cancelled, to perform the power ramping of the PRACH retransmission in a case where at least one of the *N* preamble repetitions is not cancelled.

In the embodiments of the present disclosure, the terminal receives the first indication information sent by the network device. The first indication information indicates that the terminal ramps the power of the PRACH retransmission in the case where at least one of the *N* preamble repetitions is not cancelled. Therefore, when receiving the first indication information sent by the network device, the terminal may determine to perform the power ramping of the PRACH retransmission in the case where at least one of the *N* preamble repetitions is not cancelled.

By implementing the embodiments of the present disclosure, the terminal determines to perform a PRACH transmission with *N* preamble repetitions, where *N* is an integer greater than 1; the network device sends first indication information to the terminal, where the first indication information indicates that the terminal ramps the power of the PRACH retransmission in the case where at least one of the *N* preamble repetitions is not cancelled; and the terminal determines, based on the first indication information and a case that the *N* preamble repetitions are cancelled, to perform the power ramping of the PRACH retransmission in a case where at least one of the *N* preamble repetitions is not cancelled. Therefore, the terminal may determine whether to perform the power ramping of the PRACH retransmission based on the status of multiple preamble repetitions, which may reasonably perform the power allocation to save the power consumption of the terminal.

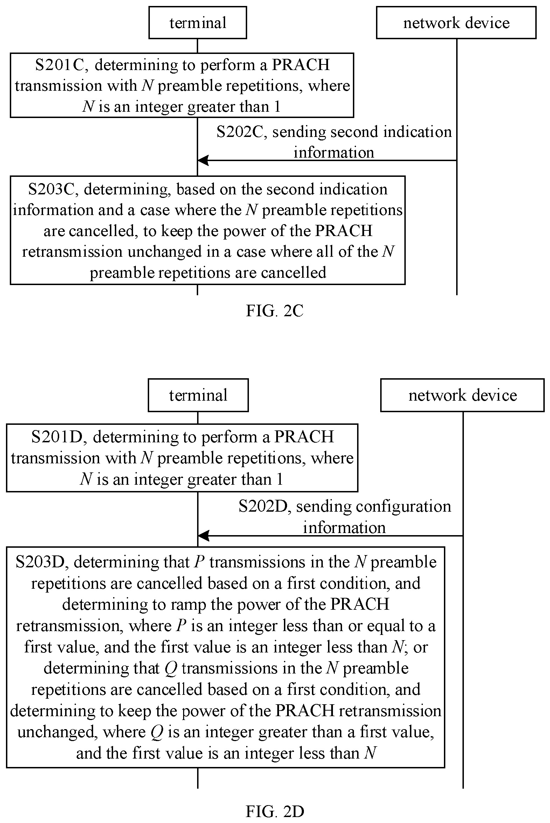

FIG. 2C is a flowchart illustrating a power control method according to an embodiment of the present disclosure. As shown in FIG. 2C, embodiments of the present disclosure relate to a power control method, which includes the following steps.

At step S201C, a terminal determines to perform a PRACH transmission with *N* preamble repetitions, where *N* is an integer greater than 1.

Regarding the optional implementation of S201C, reference may be made to the optional implementation of S201A in FIG. 2A and other related parts in the embodiments involved in FIG. 2A, which will not be repeated here.

At step S202C, a network device sends second indication information to the terminal.

In some embodiments, the second indication information indicates that the terminal keeps the power of the PRACH retransmission unchanged in a case where all of the *N* preamble repetitions are cancelled.

In some embodiments, the network device may reuse the existing signaling or message to send the second indication information to the terminal, or use a new signaling or message to send the second indication information to the terminal.

In some embodiments, the network device sends the second indication information to the terminal autonomously, or sends the second indication information to the terminal in the case where a specific condition is met.

For example, in the case where the network device receives a request message from the terminal, the network device sends the second indication information to the terminal.

At step S203C, the terminal determines, based on the second indication information and a case where the *N* preamble repetitions are cancelled, to keep the power of the PRACH retransmission unchanged in a case where all of the *N* preamble repetitions are cancelled.

In the embodiments of the present disclosure, the terminal receives the second indication information sent by the network device. The second indication information indicates that the terminal keeps the power of the PRACH retransmission unchanged in a case where all of the *N* preamble repetitions are cancelled. Therefore, when receiving the second indication information sent by the network device, the terminal may determine to keep the power of the PRACH retransmission unchanged in the case where all of the *N* preamble repetitions are cancelled.

By implementing the embodiments of the present disclosure, the terminal determines to perform a PRACH transmission with *N* preamble repetitions, where *N* is an integer greater than 1; the network device sends second indication information to the terminal, where the second indication information indicates that the terminal keeps the power of the PRACH retransmission unchanged in a case where all of the *N* preamble repetitions are cancelled; and the terminal determines, based on the second indication information and a case where the *N* preamble repetitions are cancelled, to keep the power of the PRACH retransmission unchanged in a case where all of the *N* preamble repetitions are cancelled. Therefore, the terminal may determine whether to perform the power ramping of the PRACH retransmission based on the status of multiple preamble repetitions, which may reasonably perform the power allocation to save the power consumption of the terminal.

FIG. 2D is a flowchart illustrating a power control method according to an embodiment of the present disclosure. As shown in FIG. 2D, embodiments of the present disclosure relate to a power control method, which includes the following steps.

At step S201D, a terminal determines to perform a PRACH transmission with *N* preamble repetitions, where *N* is an integer greater than 1.

Regarding the optional implementation of S201D, reference may be made to the optional implementation of S201A in FIG. 2A and other related parts in the embodiments involved in FIG. 2A, which will not be repeated here.

At step S202D, a network device sends configuration information to the terminal.

In some embodiments, the configuration information indicates a first value.

In some embodiments, the network device may reuse the existing signaling or message to send the configuration information to the terminal, or use a new signaling or message to send the configuration information to the terminal.

In some embodiments, the configuration information indicates that the first value is *N*/2.

In some embodiments, the configuration information indicates an offset value, and the first value is *N* minus the offset value.

At step S203D, the terminal determines that *P* transmissions in the *N* preamble repetitions are cancelled based on a first condition, and determines to perform the power ramping of the PRACH retransmission, where *P* is an integer less than or equal to a first value, and the first value is an integer less than *N*; or determines that *Q* transmissions in the *N* preamble repetitions are cancelled based on a first condition, and determines to keep the power of the PRACH retransmission unchanged, where *Q* is an integer greater than a first value, and the first value is an integer less than *N*.

In an embodiment of the present disclosure, the terminal determines to perform the power ramping of the PRACH retransmission in the case where the terminal determines that *P* transmissions in the *N* preamble repetitions are cancelled based on a first condition, and *P* is an integer less than or equal to a first value, where the first value is an integer less than *N*.

For example, *N* is 8, the first value is 4, *P* is 2, and *P* is less than the first value. In the case where the terminal determines that two of the eight preamble repetitions are cancelled based on the first condition, the terminal determines to perform the power ramping of the PRACH retransmission.

In an embodiment of the present disclosure, the terminal determines to keep the power of the PRACH retransmission unchanged in the case where the terminal determines that *Q* transmissions in the *N* preamble repetitions are cancelled based on a first condition, and *Q* is an integer greater than a first value, where the first value is an integer less than *N*.

For example, *N* is 8, the first value is 4, *Q* is 6, and the terminal determines to keep the power of the PRACH retransmission unchanged in the case where the terminal determines that six of the eight preamble repetitions are cancelled based on the first condition.

In some embodiments, the first condition includes at least one of: a resource collision, a reduction in a transmission power caused by a power allocation, or a transmission cancellation due to a power allocation.

In some embodiments, the terminal ramps the power of the PRACH retransmission in the case where the terminal determines that specific transmissions in the *N* preamble repetitions are cancelled due to a resource collision, where the number of the specific transmissions is less than or equal to a first value, and the first value is an integer less than *N*; or the terminal keeps the power of the PRACH retransmission unchanged in the case where the terminal determines that specific transmissions in the *N* preamble repetitions are cancelled due to a resource collision, where the number of the specific transmissions is greater than a first value, and the first value is an integer less than *N*.

In some embodiments, the terminal ramps the power of the PRACH retransmission in the case where the terminal determines that specific transmissions in the *N* preamble repetitions are cancelled due to the reduction in the transmission power caused by the power allocation, where the number of the specific transmissions is less than or equal to a first value, and the first value is an integer less than *N*; or the terminal keeps the power of the PRACH retransmission unchanged in the case where the terminal determines that specific transmissions in the *N* preamble repetitions are cancelled due to the reduction in the transmission power caused by the power allocation, where the number of the specific transmissions is greater than a first value, and the first value is an integer less than *N*.

In some embodiments, the terminal ramps the power of the PRACH retransmission in the case where the terminal determines that specific transmissions in the *N* preamble repetitions are cancelled due to the power allocation, where the number of the specific transmissions is less than or equal to a first value, and the first value is an integer less than *N*; or the terminal keeps the power of the PRACH retransmission unchanged in the case where the terminal determines that specific transmissions in the *N* preamble repetitions are cancelled due to the power allocation, where the number of the specific transmissions is greater than a first value, and the first value is an integer less than *N*.

In some embodiments, the resource collision includes at least one of: a preamble transmission and uplink transmissions other than the preamble transmission being scheduled in the same time slot, an interval between the preamble transmission and uplink transmissions other than the preamble transmission not meeting a specific condition, a preamble transmission and downlink transmissions other than the preamble transmission overlapping in a time domain in a TDD band, a preamble transmission and downlink symbol transmissions other than the preamble transmission overlapping in a time domain in a TDD band, or for an HD-FDD terminal, a preamble transmission and downlink transmissions other than the preamble transmission overlapping in a time domain.

In some embodiments, the uplink transmissions other than the preamble transmission include at least one of: a PUCCH transmission, a PUSCH transmission, or an SR transmission.

In some embodiments, the downlink transmissions other than the preamble transmission include at least one of: a PDCCH transmission, a PDSCH transmission, or a CSI-RS transmission.

In some embodiments, the preamble transmission and the downlink symbol transmissions other than the preamble transmission overlapping in the time domain in the TDD band includes at least one of: an effective RO of the preamble transmission overlapping with the PDCCH in the time domain, an effective RO of the preamble transmission overlapping with an SPS PDSCH in the time domain, an effective RO of the preamble transmission overlapping with an SPS CSI-RS in the time domain, or an effective RO of the preamble transmission overlapping with a downlink symbol indicated by the network device via a cell-specific upper-layer signaling or a terminal-specific upper-layer signaling in the time domain.

In some embodiments, for the HD-FDD terminal, the preamble transmission and the downlink transmissions other than the preamble transmission overlapping in the time domain includes at least one of: an effective RO of the preamble transmission overlapping with a common search space (CSS) in the time domain, an effective RO of the preamble transmission overlapping with a UE-specific search space (USS) PDCCH in the time domain, an effective RO of the preamble transmission overlapping with an SPS PDSCH in the time domain, an effective RO of the preamble transmission overlapping with a CSI-RS in the time domain, an effective RO of the preamble transmission overlapping with a downlink PRS in the time domain, an effective RO of the preamble transmission overlapping with a dynamic grant (DG) PDSCH in the time domain, an effective RO of the preamble transmission overlapping with a synchronization signal and physical broadcast channel block (SSB) in the time domain, a handover time interval between an effective RO of the preamble transmission and an SSB incapable of being guaranteed by scheduling, or a handover time interval between an effective RO of the preamble transmission and a CSS PDCCH incapable of being guaranteed by scheduling.

By implementing the embodiments of the present disclosure, the terminal determines to perform a PRACH transmission with *N* preamble repetitions, where *N* is an integer greater than 1; the network device sends configuration information to the terminal, where the configuration information indicates a first value; and the terminal determines that *P* transmissions in the *N* preamble repetitions are cancelled based on a first condition, and determines to perform the power ramping of the PRACH retransmission, where *P* is an integer less than or equal to a first value, and the first value is an integer less than *N*; or determines that *Q* transmissions in the *N* preamble repetitions are cancelled based on a first condition, and determines to keep the power of the PRACH retransmission unchanged, where *Q* is an integer greater than a first value, and the first value is an integer less than *N*. Therefore, the terminal may determine whether to perform the power ramping of the PRACH retransmission based on the status of multiple preamble repetitions, which may reasonably perform the power allocation to save the power consumption of the terminal.

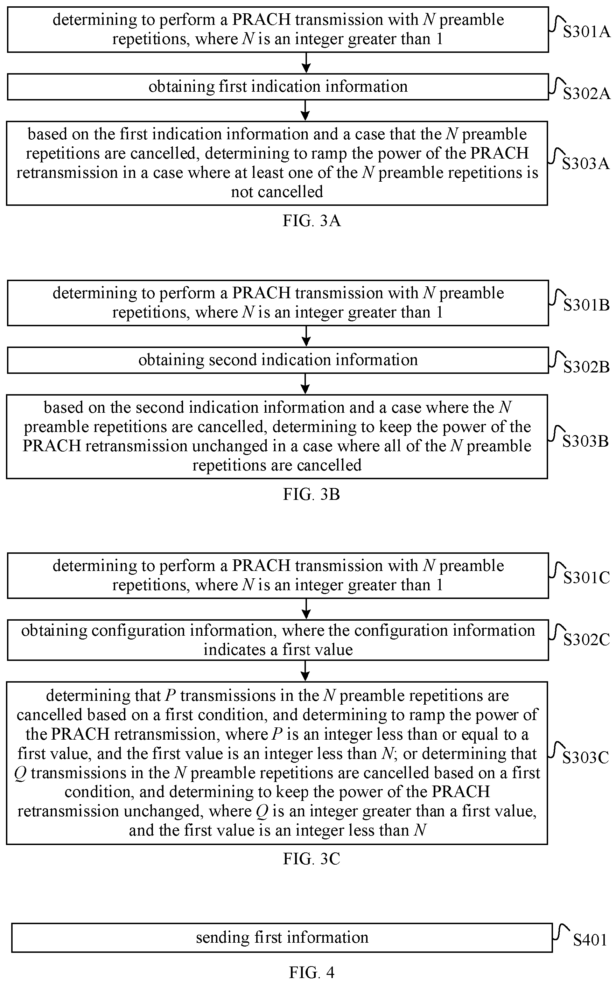

FIG. 3A is a flowchart illustrating a power control method according to an embodiment of the present disclosure. As shown in FIG. 3A, embodiments of the present disclosure relate to a power control method, which is performed by a terminal and includes the following steps.

At step S301A, it is determined to perform a PRACH transmission with *N* preamble repetitions, where *N* is an integer greater than 1.

Regarding the optional implementation of S301A, reference may be made to the optional implementation of S201A in FIG. 2A and other related parts in the embodiments involved in FIG. 2A, which will not be repeated here.

At step S302A, first indication information is obtained.

Regarding the optional implementation of S302A, reference may be made to the optional implementation of S202B in FIG. 2B and other related parts in the embodiments involved in FIG. 2B, which will not be repeated here.

In some embodiments, the terminal receives first indication information sent by a network device, but not limited thereto; and the terminal may also receive first indication information sent by other entities.

In some embodiments, the terminal obtains the first indication information as specified by a protocol.

In some embodiments, the terminal obtains the first indication information from an upper layer(s).

In some embodiments, the terminal performs the processing to obtain the first indication information.

In some embodiments, S302A is omitted, and the terminal autonomously implements the function indicated by the first indication information, or the above function is omitted or defaulted.

In some embodiments, the first indication information indicates that the terminal ramps the power of the PRACH retransmission in a case where at least one of the *N* preamble repetitions is not cancelled.

At step S302A, based on the first indication information and a case that the *N* preamble repetitions are cancelled, it is determined to perform the power ramping of the PRACH retransmission in a case where at least one of the *N* preamble repetitions is not cancelled.

Regarding the optional implementation of S303A, reference may be made to the optional implementation of S203B in FIG. 2B and other related parts in the embodiments involved in FIG. 2B, which will not be repeated here.

By implementing the embodiments of the present disclosure, the terminal determines to perform a PRACH transmission with *N* preamble repetitions, where *N* is an integer greater than 1; the terminal obtains first indication information, where the first indication information indicates that the terminal ramps the power of the PRACH retransmission in the case where at least one of the *N* preamble repetitions is not cancelled; and the terminal determines, based on the first indication information and a case that the *N* preamble repetitions are cancelled, to perform the power ramping of the PRACH retransmission in a case where at least one of the *N* preamble repetitions is not cancelled. Therefore, the terminal may determine whether to perform the power ramping of the PRACH retransmission based on the status of multiple preamble repetitions, which may reasonably perform the power allocation to save the power consumption of the terminal.

FIG. 3B is a flowchart illustrating a power control method according to an embodiment of the present disclosure. As shown in FIG. 3B, embodiments of the present disclosure relate to a power control method, which is performed by a terminal and includes the following steps.

At step S301B, it is determined to perform a PRACH transmission with *N* preamble repetitions, where *N* is an integer greater than 1.

Regarding the optional implementation of S301B, reference may be made to the optional implementation of S201A in FIG. 2A and other related parts in the embodiments involved in FIG. 2A, which will not be repeated here.

At step S302B, second indication information is obtained.

Regarding the optional implementation of S302B, reference may be made to the optional implementation of S202C in FIG. 2C and other related parts in the embodiments involved in FIG. 2C, which will not be repeated here.

In some embodiments, the terminal receives second indication information sent by a network device, but not limited thereto; and the terminal may also receive second indication information sent by other entities.

In some embodiments, the terminal obtains the second indication information as specified by a protocol.

In some embodiments, the terminal obtains the second indication information from an upper layer(s).

In some embodiments, the terminal performs the processing to obtain the second indication information.

In some embodiments, S302A is omitted, and the terminal autonomously implements the function indicated by the second indication information, or the above function is omitted or defaulted.

In some embodiments, the second indication information indicates that the terminal keeps the power of the PRACH retransmission unchanged in a case where all of the *N* preamble repetitions are cancelled.

At step S303B, based on the second indication information and a case where the *N* preamble repetitions are cancelled, it is determined to keep the power of the PRACH retransmission unchanged in a case where all of the *N* preamble repetitions are cancelled.

Regarding the optional implementation of S303B, reference may be made to the optional implementation of S203C in FIG. 2C and other related parts in the embodiments involved in FIG. 2C, which will not be repeated here.

By implementing the embodiments of the present disclosure, the terminal determines to perform a PRACH transmission with *N* preamble repetitions, where *N* is an integer greater than 1; the terminal obtains second indication information, where the second indication information indicates that the terminal keeps the power of the PRACH retransmission unchanged in a case where all of the *N* preamble repetitions are cancelled; and the terminal determines, based on the second indication information and a case where the *N* preamble repetitions are cancelled, to keep the power of the PRACH retransmission unchanged in a case where all of the *N* preamble repetitions are cancelled. Therefore, the terminal may determine whether to perform the power ramping of the PRACH retransmission based on the status of multiple preamble repetitions, which may reasonably perform the power allocation to save the power consumption of the terminal.

FIG. 3C is a flowchart illustrating a power control method according to an embodiment of the present disclosure. As shown in FIG. 3B, embodiments of the present disclosure relate to a power control method, which is performed by a terminal and includes the following steps.

At step S301C, it is determined to perform a PRACH transmission with *N* preamble repetitions, where *N* is an integer greater than 1.

Regarding the optional implementation of S301C, reference may be made to the optional implementation of S201A in FIG. 2A and other related parts in the embodiments involved in FIG. 2A, which will not be repeated here.

At step S302C, configuration information is obtained, where the configuration information indicates a first value.

Regarding the optional implementation of S302C, reference may be made to the optional implementation of S202D in FIG. 2D and other related parts in the embodiments involved in FIG. 2D, which will not be repeated here.

In some embodiments, the terminal receives configuration information sent by a network device, but not limited thereto; and the terminal may also receive configuration information sent by other entities.

In some embodiments, the terminal obtains the configuration information as specified by a protocol.

In some embodiments, the terminal obtains the configuration information from an upper layer(s).

In some embodiments, the terminal performs the processing to obtain the configuration information.

In some embodiments, S302C is omitted, and the terminal autonomously implements the function indicated by the configuration information, or the above function is omitted or defaulted.

In some embodiments, the configuration information indicates that the first value is *N*/2.

In some embodiments, the configuration information indicates an offset value, and the first value is *N* minus the offset value.

At step S303C, it is determined that *P* transmissions in the *N* preamble repetitions are cancelled based on a first condition, and it is determined to perform the power ramping of the PRACH retransmission, where *P* is an integer less than or equal to a first value, and the first value is an integer less than *N*; or it is determined that *Q* transmissions in the *N* preamble repetitions are cancelled based on a first condition, and it is determined to keep the power of the PRACH retransmission unchanged, where *Q* is an integer greater than a first value, and the first value is an integer less than *N*.

Regarding the optional implementation of S303C, reference may be made to the optional implementation of S203D in FIG. 2D and other related parts in the embodiments involved in FIG. 2D, which will not be repeated here.

In some embodiments, the first condition includes at least one of: a resource collision, a reduction in a transmission power caused by a power allocation, or a transmission cancellation due to a power allocation.

In some embodiments, the resource collision includes at least one of: a preamble transmission and uplink transmissions other than the preamble transmission being scheduled in the same time slot, an interval between the preamble transmission and uplink transmissions other than the preamble transmission not meeting a specific condition, a preamble transmission and downlink transmissions other than the preamble transmission overlapping in a time domain in a TDD band, a preamble transmission and downlink symbol transmissions other than the preamble transmission overlapping in a time domain in a TDD band, or for an HD-FDD terminal, a preamble transmission and downlink transmissions other than the preamble transmission overlapping in a time domain.

In some embodiments, the uplink transmissions other than the preamble transmission include at least one of: a PUCCH transmission, a PUSCH transmission, or an SR transmission.

In some embodiments, the downlink transmissions other than the preamble transmission include at least one of: a PDCCH transmission, a PDSCH transmission, or a CSI-RS transmission.

By implementing the embodiments of the present disclosure, the terminal determines to perform a PRACH transmission with *N* preamble repetitions, where *N* is an integer greater than 1; the terminal obtains configuration information, where the configuration information indicates a first value; and the terminal determines that *P* transmissions in the *N* preamble repetitions are cancelled based on a first condition, and determines to perform the power ramping of the PRACH retransmission, where *P* is an integer less than or equal to a first value, and the first value is an integer less than *N*; or determines that *Q* transmissions in the *N* preamble repetitions are cancelled based on a first condition, and determines to keep the power of the PRACH retransmission unchanged, where *Q* is an integer greater than a first value, and the first value is an integer less than *N*. Therefore, the terminal may determine whether to perform the power ramping of the PRACH retransmission based on the status of multiple preamble repetitions, which may reasonably perform the power allocation to save the power consumption of the terminal.

FIG. 4 is a flowchart illustrating a power control method according to an embodiment of the present disclosure. As shown in FIG. 4, embodiments of the present disclosure relate to a power control method, which is performed by a network device and includes the following step.

At step S401, first information is sent.

In some embodiments, the first information includes at least one of: first indication information, where the first indication information indicates that a terminal ramps a power of a PRACH retransmission in a case where at least one of *N* preamble repetitions is not cancelled; second indication information, where the second indication information indicates that a terminal keeps a power of a PRACH retransmission unchanged in a case where all of *N* preamble repetitions are cancelled; or configuration information, where the configuration information indicates a first value, the first value is used by a terminal to perform a power ramping of a PRACH retransmission in a case where *P* transmissions in *N* preamble repetitions are cancelled based on a first condition, where *P* is less than or equal to the first value, and the first value is an integer less than *N*; or the first value is used by a terminal to keep a power of a PRACH retransmission unchanged in a case where *Q* transmissions in the *N* preamble repetitions are cancelled based on a first condition, where *Q* is greater than the first value, and the first value is an integer less than *N*.

Regarding the optional implementation of S401, reference may be made to the optional implementation of S202B in FIG. 2B and other related parts in the embodiments involved in FIG. 2B, which will not be repeated here.

Regarding the optional implementation of S401, reference may be made to the optional implementation of S202C in FIG. 2C and other related parts in the embodiments involved in FIG. 2C, which will not be repeated here.

Regarding the optional implementation of S401, reference may be made to the optional implementation of S202D in FIG. 2D and other related parts in the embodiments involved in FIG. 2D, which will not be repeated here.

In some embodiments, the network device sends the first information to the terminal, but not limited thereto; and the network device may also send the first information to other entities.

Optionally, the first information is used by the terminal to determine, based on the first indication information and a case that the *N* preamble repetitions are cancelled, to perform the power ramping of the PRACH retransmission in a case where at least one of the *N* preamble repetitions is not cancelled. For the optional implementation, reference may be made to the optional implementation of S203B in FIG. 2B and other related parts in the embodiments involved in FIG. 2B, which will not be repeated here.

Optionally, the first information is used by the terminal to determine, based on the second indication information and a case where the *N* preamble repetitions are cancelled, to keep the power of the PRACH retransmission unchanged in a case where all of the *N* preamble repetitions are cancelled. For the optional implementation, reference may be made to the optional implementation of S203C in FIG. 2C and other related parts in the embodiments involved in FIG. 2C, which will not be repeated here.

Optionally, the first information is used by the terminal to determine that specific transmissions in the *N* preamble repetitions are cancelled based on a first condition, and determine to perform the power ramping of the PRACH retransmission, where the number of the specific transmissions is less than or equal to a first value, and the first value is an integer less than *N*; or determine that specific transmissions in the *N* preamble repetitions are cancelled based on a first condition, and determine to keep the power of the PRACH retransmission unchanged, where the number of the specific transmissions is greater than a first value, and the first value is an integer less than *N*. For the optional implementation, reference may be made to the optional implementation of S203D in FIG. 2D and other related parts in the embodiments involved in FIG. 2D, which will not be repeated here.

In some embodiments, the first condition includes at least one of: a resource collision, a reduction in a transmission power caused by a power allocation, or a transmission cancellation due to a power allocation.

In some embodiments, the resource collision includes at least one of: a preamble transmission and uplink transmissions other than the preamble transmission being scheduled in the same time slot, an interval between the preamble transmission and uplink transmissions other than the preamble transmission not meeting a specific condition, a preamble transmission and downlink transmissions other than the preamble transmission overlapping in a time domain in a TDD band, a preamble transmission and downlink symbol transmissions other than the preamble transmission overlapping in a time domain in a TDD band, or for an HD-FDD terminal, a preamble transmission and downlink transmissions other than the preamble transmission overlapping in a time domain.

In some embodiments, the uplink transmissions other than the preamble transmission include at least one of: a PUCCH transmission, a PUSCH transmission, or an SR transmission.

In some embodiments, the downlink transmissions other than the preamble transmission include at least one of: a PDCCH transmission, a PDSCH transmission, or a CSI-RS transmission.

In some embodiments, for PRACH coverage enhancement, it is proposed that multiple transmissions may be performed in a time domain, as follows: further uplink coverage enhancements for a PRACH, a power domain and a discrete Fourier transformation-spreading-orthogonal frequency division multiplexing (DFT-S-OFDM) are specified.

The detailed objectives are as follows: specify following PRACH coverage enhancements (RAN1, RAN2): multiple PRACH transmissions with the same beams for 4-step random access channel (RACH) procedure; study, and if justified, specify PRACH transmissions with different beams for 4-step RACH procedure.

Note 1: The enhancements of a PRACH are targeting for frequency range 2 (FR2), and can also apply to FR1 when applicable.

Note 2: The enhancements of a PRACH are targeting for short PRACH formats, and can also apply to other formats when applicable.

In some embodiments, the uplink power for PRACH retransmissions is increased by one step for each additional repetition. Certainly, if any one of the following four conditions occurs, the physical layer will notify an upper layer to pause incrementing a power ramping counter by 1.
- The index of a synchronization signal and physical broadcast channel block (SSB) for RACH occasion (RO) selection has changed.
- A space filter for an uplink transmission has changed.
- Power allocation causes the reduction in the PRACH transmission power or the cancellation of a PRACH transmission.
- A PRACH transmission is cancelled due to resource collisions.

Among these, cancellations of the PRACH transmission due to resource collisions include as follows.
- Potential cancellations of the PRACH transmission that occur when a PRACH and other uplink channels/signals are scheduled or configured in the same time slot, or when the gap between a PRACH and other channels/signals does not meet protocol requirements.
- In time division duplex (TDD) bands, the time-domain overlapping between a PRACH and downlink channels/signals may lead to possible cancellations of the PRACH transmission.
- For half-duplex frequency division duplex (HD-FDD) terminals, the time-domain overlapping between a PRACH and downlink channels/signals may lead to possible cancellations of the PRACH transmission.

In some embodiments, PRACH transmission collision handling:

After a physical layer determines a valid RO that may be used for a PRACH transmission and receives a transmission indication from an upper layer (as follows), the actual transmission may be cancelled due to a collision with transmissions on other channels.

1> Instruct the physical layer to transmit the random access preamble using the selected PRACH occasion, the corresponding random access radio network temporary identifier (RA-RNTI) (if available), the preamble index (*PREAMBLE_INDEX*) and the preamble received target power (*PREAMBLE_RECEIVED_TARGET_POWER*).

In some embodiments, collisions between the PRACH transmission and other channel transmissions include the following cases.

Case 1: TDD band PRACH and DL collision handling: time overlapping between a PRACH and any one of a physical downlink control channel (PDCCH), a physical downlink shared channel (PDSCH), or a channel status information-reference signal (CSI-RS).

For the operation on a single carrier in unpaired spectrum, if a UE is configured by higher layers to transmit a sounding reference signal (SRS), a physical uplink control channel (PUCCH), a physical uplink shared channel (PUSCH), or a PRACH in a set of symbols of a slot and the UE detects a downlink control information (DCI) format 1_0, DCI format 1_1, or DCI format 0_1 indicating to the UE to receive CSI-RS or PDSCH in a subset of symbols from the set of symbols, then
the UE does not expect to cancel the transmission of the PUCCH or PUSCH or PRACH in the set of symbols if the first symbol in the set occurs within *T*_{proc,2} relative to a last symbol of a control resource set (CORESET) where the UE detects the DCI format:
otherwise, the UE cancels the PUCCH, or PUSCH, or PRACH transmission in the set of symbols.

*T*_{proc,2} is the PUSCH preparation time for the corresponding UE processing capability assuming *d*_{2,1} = 1 and corresponds to the smallest subcarrier spacing (SCS) configuration between the SCS configuration of the PDCCH carrying the DCI format and the SCS configuration of the SRS. PUCCH, PUSCH or *µ*ᵣ, where *µ*ᵣ corresponds to the SCS configuration of the PRACH if it is 15 kHz or higher; otherwise, *µ*ᵣ = 0.

For a set of symbols of a slot corresponding to a valid PRACH occasion and *N*_{gap} symbols before the valid PRACH occasion, the UE does not receive the PDCCH, PDSCH, or CSI-RS in the slot if a reception would overlap with any symbol from the set of symbols. The UE does not expect the set of symbols of the slot to be indicated as downlink by tdd-UL-DL-ConfigurationCommon or tdd-UL-DL-ConfigurationDedicated.

When a dynamic grant (DG) PDSCH and a DG CSI-RS overlap with a PRACH in a time domain, whether the terminal performs a PRACH transmission or cancels a PRACH transmission and performs DG PDSCH and CSI-RS transmissions depends on the terminal implementation. In other words, the terminal may cancel the actual transmission of a PRACH.

When a PDCCH, an SPS PDSCH, and an SPS CSI-RS overlap with a valid PRACH occasion in a time domain, the terminal may cancel the downlink transmission of the PDCCH, the SPS PDSCH, and the SPS CSI-RS.

Furthermore, the terminal does not expect the valid PRACH occasion and *N*_{gap} symbols preceding the valid PRACH occasion to be indicated as downlink symbols by the cell-specific upper-layer signaling tdd-UL-DL-ConfigurationCommon, the UE-specific upper-layer signaling tdd-UL-DL-ConfigurationDedicated, and DCI format 2-0. For downlink symbols indicated by a gNB via a cell-specific or UE-specific upper-layer signaling, the terminal does not perform a PRACH transmission. The terminal does not expect the CORESET corresponding to the type 0 common search space (CSS) to be indicated as an uplink symbol.

When the terminal monitors DCI format 2-0 (slot format indication, SFI) and a symbol is indicated as a flexible symbol, the PDCCH ordered PRACH may be transmitted on it. However, a PRACH triggered by media access control (MAC) or radio resource control (RRC) cannot be transmitted.

For a set of symbols of a slot indicated to a UE as flexible by tdd-UL-DL-ConfigurationCommon and tdd-UL-DL-ConfigurationDedicated if provided, or when tdd-UL-DL-ConfigurationCommon and tdd-UL-DL-ConfigurationDedicated are not provided to the UE, and if the UE detects a DCI format 2_0 providing a format for the slot using a slot format value other than 255, the following applies.

If one or more symbols from the set of symbols are symbols in a CORESET configured to the UE for PDCCH monitoring, the UE receives PDCCH in the CORESET only if an SFI-index field value in DCI format 2_0 indicates that the one or more symbols are downlink symbols.

If an SFI-index field value in DCI format 2_0 indicates the set of symbols of the slot as flexible and the UE detects a DCI format 1_0, DCI format 1_1, or DCI format 0_1 indicating to the UE to receive a PDSCH or CSI-RS in the set of symbols of the slot, the UE receives PDSCH or CSI-RS in the set of symbols of the slot.

If an SFI-index field value in DCI format 2_0 indicates the set of symbols of the slot as flexible and the UE detects a DCI format 0_0, DCI format 0_1, DCI format 1_0, DCI format 1_1, DCI format 2_3, or a random access response (RAR) UL grant indicating to the UE to transmit a PUSCH, the PUCCH, PRACH, or SRS in the set of symbols of the slot the UE transmits the PUSCH, PUCCH, PRACH, or SRS in the set of symbols of the slot.

If an SFI-index field value in DCI format 2_0 indicates the set of symbols of the slot as flexible, and the UE does not detect a DCI format 1_0, DCI format 1_1, or DCI format 0_1 indicating to the UE to receive a PDSCH or CSI-RS, or the UE does not detect a DCI format 0_0, DCI format 0_1, DCI format 1_0, DCI format 1_1, DCI format 2_3, or a RAR UL grant indicating to the UE to transmit the PUSCH, PUCCH, PRACH, or SRS in the set of symbols of the slot, the UE does not transmit or receive in the set of symbols of the slot.

For symbols occupied by the CORESET, if SFI monitoring is configured but no uplink or flexible indication of SFI is detected, the symbol is considered a downlink symbol, and the terminal does not perform PDCCH ordered PRACH transmission on it.

A UE assumes that flexible symbols in a CORESET configured to the UE for PDCCH monitoring are downlink symbols if the UE does not detect an SFI-index field value in DCI format 2_0 indicating the set of symbols of the slot as flexible or uplink and the UE does not detect a DCI format 0_0, DCI format 0_1, DCI format 1_0, DCI format 1_1, or DCI format 2_3 indicating to the UE to transmit an SRS, PUSCH, PUCCH, or PRACH in the set of symbols.

The terminal may perform a PDCCH ordered PRACH transmission on a flexible symbol where no SFI indication is detected. However, for PRACH transmissions triggered by MAC or RRC, if the terminal is configured to monitor SFI indication (DCI format 2-0), the PRACH transmission will not be cancelled if the gap between the last symbol of a CORESET and the first symbol of a PRACH is less than T_process,2; otherwise, the PRACH transmission may be cancelled.

For a set of symbols of a slot that are indicated as flexible by tdd-UL-DL-ConfigurationCommon, and tdd-UL-DL-ConfigurationDedicated if provided, or when tdd-UL-DL-ConfigurationCommon, and tdd-UL-DL-ConfigurationDedicated are not provided to the UE, and if the UE does not detect a DCI format 2_0 providing a slot format for the slot, the following applies.

The UE receives a PDSCH or CSI-RS in the set of symbols of the slot if the UE receives a corresponding indication by a DCI format 1_0, DCI format 1_1, or DCI format 0_1.

The UE transmits a PUSCH, PUCCH, PRACH, or SRS in the set of symbols of the slot if the UE receives a corresponding indication by a DCI format 0_0, DCI format 0_1, DCI format 1_0, DCI format 1_1, DCI format 2_3, or a RAR UL grant.

The UE receives PDCCH: if the UE is configured by higher layers to receive a PDSCH or CSI-RS in the set of symbols of the slot, the UE does not receive the PDSCH or the CSI-RS in the set of symbols of the slot.

If the UE is configured by higher layers to transmit an SRS, or PUCCH, or PUSCH, or PRACH in the set of symbols of the slot, the UE does not expect to cancel the transmission of the PUCCH, or the PUSCH, or the PRACH in the slot if the first symbol of the PUCCH or the PUSCH or the PRACH in the slot occurs within *T*_{proc.2} relative to a last symbol of a CORESET where the UE is configured to monitor a PDCCH for DCI format 2_0. Otherwise, the UE cancels the PUCCH, or the PUSCH, or the PRACH transmission in the slot.

The UE does not expect to cancel the transmission of an SRS in symbols from the set of symbols that occur within *T*_{proc.2} relative to a last symbol of a CORESET where the UE is configured to monitor a PDCCH for DCI format 2_0. The UE cancels the SRS transmission in remaining symbols from the set of symbols.

*T*_{proc.2} is the PUSCH preparation time for the corresponding UE processing capability. Assuming *d*_{2,1} =1 and *µ* corresponds to the smallest SCS configuration between the SCS configuration of the PDCCH carrying the DCI format 2_0 and the SCS configuration of the SRS, PUCCH, PUSCH or *µ*, where *µ* corresponds to the SCS configuration of the PRACH if it is 15kHz or higher; otherwise *µ* = 0.

Case 2: PRACH and other uplink (UL) channels or UL reference signals collison handling in Rel-15.

A UE does not transmit a PRACH and other uplink channels in the same slot, or when the time gap between a PRACH and other uplink channels is less than *N* symbols. The other channels include a PUCCH, a PUSCH and a scheduling request (SR) channel.

For a single cell operation or for an operation with carrier aggregation in the same frequency band, a UE does not transmit a PRACH and a PUSCH/PUCCH/SRS in the same slot or when a gap between the first or last symbol of a PRACH transmission in a first slot is separated by less than *N* symbols from the last or first symbol, respectively, of a PUSCH/PUCCH/SRS transmission in a second slot where *N* = 2 for *µ* = 0 or *µ* = 1, *N* = 4 for *µ* = 2 or *µ* = 3, and *µ* is the SCS configuration for the active UL bandwidth part (BWP).

A UE does not simultaneously transmit a PRACH and a PUSCH/PUCCH/SRS in, at least, single component carrier (CC) and in-band carrier aggregation (CA), during any of the following scenarios: the same slot; when the gap between the end of a PRACH (PUSCH/PUCCH/SRS) and the start of a PUSCH/PUCCH/SRS (PRACH) is less than *N* symbols; *N* = 2 for 15 kHz and 30 kHz SCS; *N* = 4 for 60 kHz and 120 kHz SCS; working assumption: a reference SCS for determining *N* is the SCS for a UL BWP; inter-band CA; or a transmission of a PRACH or SR (on a PUCCH) if any, is up to a UE implementation.

When the above-mentioned overlapping occurs, based on the RAN1 conclusion, which channel to transmit depends on the terminal implementation.

Case 3: PRACH transmission cancellation due to power allocation in Rel-15.

In Case 1, (CCs/uplinks configured for a UE have the same numerology and overlapping transmissions between different CCs/uplinks with the same starting time and the same PUSCH/PUCCH transmission duration and one or two PUCCH group(s), when the UE is power limited due to the simultaneous transmission on multiple serving cells, -PRACH of PCell > PUCCH/PUSCH with acknowledgment (ACK)/non-acknowledgment (NACK) and/or SR > PUCCH/PUSCH with other UCIs >PUSCH w/o uplink control information (UCI) > SRS/PRACH of SCell. Within the same priority level, a primary cell (PCell) is prioritized over a secondary cell (SCell). In case that the transmission power exceeds Pcmax, scaling/dropping is applied to the lowest priority first until the aggregated power is within Pcmax. Exact scaling or dropping is left to the UE implementation. Note: different priority of SRS used for carrier switching can be discussed further.

If due to power allocation to PUSCH/PUCCH/PRACH/SRS transmissions, or due to power allocation in an E-UTRA-NR dual connectivity (EN-DC) or NR-E-UTRA dual connectivity (NE-DC) or new radio (NR)-NR dual-connectivity (NR-DC) operation, or due to slot format determination, or due to the PUSCH/PUCCH/PRACH/SRS transmission occasions being in the same slot or the gap between a PRACH transmission and a PUSCH/PUCCH/SRS transmission being small, the UE does not transmit a PRACH in a transmission occasion, Layer 1 notifies higher layers to suspend the corresponding power ramping counter.

As shown above, in CA or dual connectivity (DC) scenarios, PRACH transmissions on scells may be cancelled due to power allocation.

Case 4: HD-FDD PRACH and DL collision handling.

For Type-A HD-FDD UEs, all ROs applicable to RedCap UEs are valid, and for the case of SSB overlapping with a valid RO from the cell-specific point of view, it is left to the UE implementation whether to receive an SSB or transmit a PRACH. No support of differentiating of ROs for Type-A HD-FDD Redcap UEs and FD FDD RedCap UEs is present.

For Case 8 of a valid RO overlapping with a PDCCH in the Type 0/0A/1/2 CSS set, it is left to the UE implementation whether to receive the configured PDCCH or transmit PRACH. Note: For a valid RO intended for a PRACH triggered by a PDCCH order, it has been covered in Case 2.

For Case 8 of a valid RO overlapping with a UE-dedicated configured DL reception (e.g., a PDCCH in USS, SPS PDSCH, CSI-RS or DL PRS), it is left to the UE implementation whether to receive the DL or transmit a PRACH. Note: For a valid RO intended for a PRACH triggered by a PDCCH order, it has been covered in Case 2.

For the case of a valid RO overlapping with a dynamically scheduled DL reception, it is left to the UE implementation whether to receive the dynamically scheduled EL or transmit the PRACH.

For the case of the "back-to-back" non-overlapping UL/DL without sufficient gap between a cell-specific configured DL and a cell-specific configured UL, e.g., SSB or PDCCH in CSS vs. valid RO, it is up to the UE implementation to ensure that the switching time is satisfied. The "back-to-back" non-overlapping UL/DL without sufficient gap between the dedicated configured DL and the cell-specific configured UL may happen, e.g., PDCCH in UE-specific search space (USS), SPS PDSCH, CSI-RS or DL positioning reference signal (PRS) vs. valid RO; it is left to the UE implementation to cancel either DL reception or UL transmission to ensure sufficient switching time.

For an HD-FDD terminal, the terminal may only perform an uplink transmission or a downlink reception at any given time. Certainly, a gNB operates in a full-duplex mode. Considering that a terminal may only perform a receive/reception (RX) or transmit/transmission (TX) at any given time, similar to a TDD band, it is necessary to consider how to resolve the overlapping between an uplink PRACH transmission and a downlink transmission in a time domain.

In some embodiments, the overlapping between the PRACH and the downlink transmission may include several situations as follows.

C1: When an overlapping occurs between a valid RO and Type 0/0A/1/2 CSS, the terminal decides whether to perform a PRACH transmission or a PDCCH reception.

C2: When an overlapping occurs between a valid RO and a UE-dedicated configured DL reception, such as a USS PDCCH, SPS PDSCH, CSI-RS or DL PRS, in a time domain, the terminal autonomously decides whether to perform a PRACH transmission or a semi-persistent downlink reception.

C3: When an overlapping occurs between a valid RO and a DG PDSCH or CSI-RS, it is up to the terminal implementation to determine whether to perform a DL reception or a UL transmission.

C4: When an overlapping occurs between SSB and PRACH transmissions, the terminal autonomously decides whether to perform a DL reception or a UL transmission.

C5: When the handover time interval between an SSB/CSS PDCCH and an RO cannot be guaranteed by scheduling, the terminal autonomously decides whether to cancel a DL reception or a UL transmission.

For multiple PRACH transmissions, multiple ROs mapped by an SSB may all be used for multiple PRACH transmissions in a single RACH attempt.

In some embodiments, multiple PRACH transmissions are supported to enhance the PRACH coverage. If one or more (less than *N*) transmissions of the multiple (*N*) PRACH transmissions are cancelled due to resource collisions with other channels/signals, it is necessary to reconsider how the terminal performs power ramping.

This solution proposes a method for redefining an RO mask index under a shared RO for multiple PRACH transmissions, in order to more rationally allocate ROs configured in the same PRACH resource to different features or feature combinations. At the same time, it is possible to further avoid excessive interference to other features or feature combinations sharing the same RACH configuration in scenarios where the cell supports multiple PRACH transmissions.

Aspect 1: It is specified in a protocol that when the number of transmission cancellations is less than *N*, a physical layer of a terminal will not notify a higher layer of power ramping counter suspending; and when all *N* transmissions are cancelled, the physical layer of the terminal will notify the higher layer of power ramping counter suspending.

Aspect 2: Based on the configuration or indication from a base station, it is determine whether a terminal performs power ramping when the number of transmission cancellations is less than *N*.

Aspect 3: If a PRACH retransmission is cancelled due to a resource collision, a power ramping timer pauses incrementing by 1.

Analysis: The preferred option. This is mainly because if the terminal cancels a certain PRACH transmission, the failure of the PRACH detection on the gNB side is due to insufficient actual PRACH transmissions. From the perspective of energy savings of the terminal, the next RACH attempt will not tend to increase the power for a transmission, but will still perform multiple PRACH transmissions based on the previously determined number of repetitions.

Aspect 4: When no more than *M* PRACH transmissions are cancelled due to indications of other signals/channels/TDD band symbol directions, a physical layer of a UE will not notify a higher layer of power ramping counter suspending; and when more than *M* PRACH transmissions have reduced power or have been cancelled, a physical layer of a UE will notify a higher layer of power ramping counter suspending. The value of *M* may be configured by a base station and/or determined by a protocol agreement, such as *M* being a fixed value, or *M* = *N*/2, *M* = *N* - offset, etc.

In this embodiment, a power ramping mechanism for multiple PRACH transmissions is proposed, which clarifies the terminal behavior and saves the power consumption of the terminal as much as possible.

The embodiments of the present disclosure further provide a device for implementing any one of the above methods. For example, a device is provided, which includes units or modules for implementing steps performed by the terminal in any one of the above methods. For another example, another device is provided, which includes units or modules for implementing steps performed by a network device (such as an access network device, a core network functional node, a core network device, or the like) in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

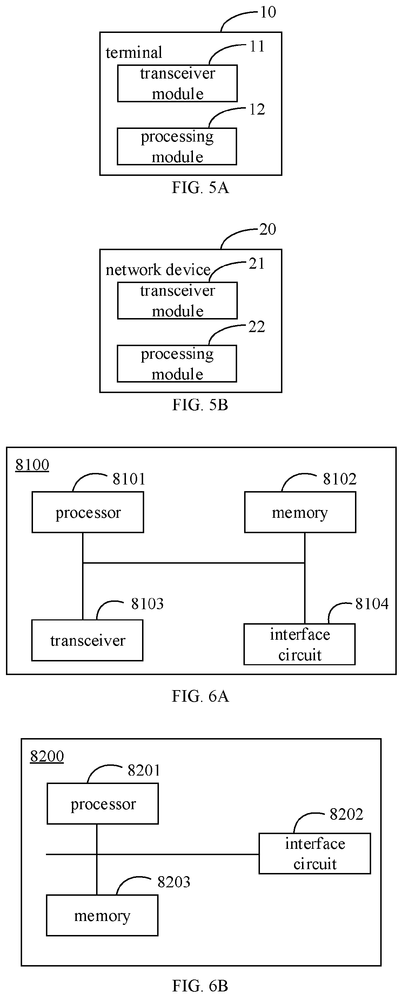

FIG. 5A is a schematic block diagram of a terminal provided in an embodiment of the present disclosure. As shown in FIG. 5A, the terminal 10 may include at least one of a transceiver module 11, a processing module 12, or the like.

In some embodiments, the processing module 12 is configured to determine to perform a PRACH transmission with *N* preamble repetitions, where *N* is an integer greater than 1; and the processing module 12 is further configured to determine whether to perform a power ramping of a PRACH retransmission based on a status of the *N* preamble repetitions.

The transceiver module 11 is configured to perform at least one of the communication steps such as sending and/or receiving steps (for example, but not limited to, S201A, S201B to S203B, S201C to S203C, and S201D to S203D) performed by the terminal 10 in any of the above methods, which will not be elaborated here. Optionally, the processing module 12 is configured to perform at least one of the other steps (for example, but not limited to, S201A, S201B to S203B, S201C to S203C, and S201D to S203D) performed by the terminal 10 in any of the above methods, which will not be elaborated here.

In some embodiments, the transceiver module may include a sending module and/or a receiving module, and the sending module and the receiving module may be separate or integrated together. Optionally, the transceiver module may be interchanged with the transceiver.

In some embodiments, the processing module may be a single module or may include multiple sub-modules. Optionally, the sub-modules may each execute all or some of the steps to be performed by the processing module. Optionally, the processing module may be interchanged with the processor.

FIG. 5B is a schematic block diagram of a network device provided in an embodiment of the present disclosure. As shown in FIG. 5B, the network device 20 may include a transceiver module 21, a processing module 22, or the like.

In some embodiments, the transceiver module 21 is configured to send first information to a terminal. The first information includes at least one of: first indication information, where the first indication information indicates that the terminal ramps a power of a PRACH retransmission in a case where at least one of *N* preamble repetitions is not cancelled; second indication information, where the second indication information indicates that the terminal keeps a power of a PRACH retransmission unchanged in a case where all of *N* preamble repetitions are cancelled; or configuration information, where the configuration information indicates a first value, the first value is used by the terminal to perform a power ramping of a PRACH retransmission in a case where specific transmissions in *N* preamble repetitions are cancelled based on a first condition, where the number of the specific transmissions is less than or equal to the first value; or the first value is used by the terminal to keep a power of a PRACH retransmission unchanged in a case where specific transmissions in *N* preamble repetitions are cancelled based on a first condition, where the number of the specific transmissions is greater than the first value.

The transceiver module 21 is configured to perform at least one of the communication steps such as sending and/or receiving steps (for example, but not limited to, S201A, S201B to S203B, S201C to S203C, and S201D to S203D) performed by the network device 20 in any of the above methods, which will not be elaborated here. Optionally, the processing module 22 is configured to perform at least one of the other steps (for example, but not limited to, S201A, S201B to S203B, S201C to S203C, and S201D to S203D) performed by the network device 20 in any of the above methods, which will not be elaborated here.

In some embodiments, the transceiver module may include a sending module and/or a receiving module, and the sending module and the receiving module may be separate or integrated together. Optionally, the transceiver module may be interchanged with the transceiver.

In some embodiments, the processing module may be a single module or may include multiple sub-modules. Optionally, the sub-modules may each execute all or some of the steps to be performed by the processing module. Optionally, the processing module may be interchanged with the processor.

FIG. 6A is a schematic block diagram of a communication device 8100 provided in an embodiment of the present disclosure. The communication device 8100 may be a network device (such as an access network device, a core network device, or the like), a terminal (such as a user equipment, or the like), a chip, chip system, or processor that supports a network device to implement any one of the above methods, or a chip, chip system, or processor that supports a terminal to implement any one of the above methods. The communication device 8100 may be configured to implement the methods as described in the above-mentioned method embodiments. For details, reference may be made to the description in the above-mentioned method embodiments.

As shown in FIG. 6A, the communication device 8100 includes one or more processors 8101. The processor 8101 may be a general-purpose processor, a special-purpose processor, or the like. The processor 8101 may be, for example, a baseband processor or a central processor. The baseband processor may be configured to process a communication protocol and communication data, and the central processor may be configured to control a communication device (such as a base station, a baseband chip, a terminal, a terminal chip, a distributed unit (DU), a centralized unit (CU), or the like), execute a program, and process data of the program. Optionally, the communication device 8100 is configured to perform any one of the above methods. Optionally, one or more processors 8101 may invoke instructions to cause the communication device 8100 to perform any one of the above methods.

In some embodiments, the communication device 8100 further includes one or more transceivers 8102. When the communication device 8100 includes one or more transceivers 8102, at least one of the communication steps such as sending and/or receiving steps (for example, but not limited to, S201A, S201B to S203B, S201C to S203C, and S201D to S203D) in the above methods is performed by the transceiver 8102, and at least one of the other steps (for example, but not limited to, S201A, S201B to S203B, S201C to S203C, and S201D to S203D) is performed by the processor 8101.

In an optional embodiment, the transceiver may include a receiver and/or a transmitter, and the receiver and the transmitter may be separate or integrated. Optionally, terms such as transceiver, transceiver unit, transceiver device, transceiver circuit, interface circuit and interface may be used interchangeably; terms such as transmitter, transmitter unit, transmitter device, and transmitter circuit may be used interchangeably; and terms such as receiver, receiver unit, receiver device, and receiver circuit may be used interchangeably.

In some embodiments, the communication device 8100 further includes one or more memories 8103 for storing data. Optionally, all or some of the memories 8103 may also be located outside the communication device 8100. In an optional embodiment, the communication device 8100 may include one or more interface circuits 8104. Optionally, the interface circuits 8104 are connected to the memory 8102. The interface circuits 8104 may be configured to receive data from the memory 8102 or other devices, and may be configured to send data to the memory 8102 or other devices. For example, the interface circuits 8104 may read data stored in the memory 8102 and send the data to the processor 8101.

The communication device 8100 described in the above embodiments may be a network device or a terminal, but the scope of the communication device 8100 described in the present disclosure is not limited thereto, and the structure of the communication device 8100 may not be limited to FIG. 6A. The communication device 8100 may be an independent device or part of a larger device. For example, the communication device 8100 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

FIG. 6B is a schematic block diagram of a chip 8200 provided in an embodiment of the present disclosure. For the case where the communication device 8100 may be a chip or a chip system, reference may be made to the block diagram of the chip 8200 shown in FIG. 6B, but the present disclosure is not limited thereto.

The chip 8200 includes one or more processors 8201, and the chip 8200 is configured to perform any one of the above methods.

In some embodiments, the chip 8200 further includes one or more interface circuits 8202. Optionally, terms such as interface circuit, interface, and transceiver pin may be used interchangeably. In some embodiments, the chip 8200 further includes one or more memories 8203 for storing data. Optionally, all or some of the memories 8203 may be located outside the chip 8200. Optionally, the interface circuits 8202 may be configured to receive data from the memory 8203 or other devices, and may be configured to send data to the memory 8203 or other devices. For example, the interface circuits 8202 may read data stored in the memory 8203 and send the data to the processor 8201.

In some embodiments, at least one of the communication steps such as sending and/or receiving steps (for example, but not limited to, S201A, S201B to S203B, S201C to S203C, and S201D to S203D) in the above methods is performed by the interface circuits 8202. For example, performing, by the interface circuits 8202, the communication steps such as sending and/or receiving steps in the above methods refers to performing, by the interface circuits 8202, data interaction between the processor 8201, the chip 8200, and the memory 8203 or the transceiver device. In some embodiments, at least one of the other steps (for example, but not limited to, S201A, S201B to S203B, S201C to S203C, and S201D to S203D) is performed by the processor 8201.

The present disclosure further provides a storage medium, which has stored therein instructions that, when executed on the communication device 8100, cause the communication device 8100 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 8100, causes the communication device 8100 to perform any one of the above methods. Optionally, the above-mentioned program product is a computer program product.

The present disclosure further provides a computer program that, when executed on a computer, causes the computer to perform functions of any one of the above-mentioned method embodiments.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the above-mentioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. A power control method, performed by a terminal and comprising:
determining to perform a physical random access channel (PRACH) transmission with *N* preamble repetitions, where *N* is an integer greater than 1; and
determining whether to perform a power ramping of a PRACH retransmission based on a status of the *N* preamble repetitions.

2. The method according to claim 1, wherein determining whether to perform the power ramping based on the status of the *N* preamble repetitions comprises:
determining, according to a protocol agreement, that at least one of the *N* preamble repetitions is not cancelled, and determining to perform the power ramping of the PRACH retransmission; or
determining, according to a protocol agreement, that all of the *N* preamble repetitions are cancelled, and determining to keep the power of the PRACH retransmission unchanged.

3. The method according to claim 1, wherein determining whether to perform the power ramping based on the status of the *N* preamble repetitions comprises:
receiving first indication information sent by a network device, wherein the first indication information indicates that the terminal ramps the power of the PRACH retransmission in a case where at least one of the *N* preamble repetitions is not cancelled;
determining, based on the first indication information and a case that the *N* preamble repetitions are cancelled, to perform the power ramping of the PRACH retransmission in a case where at least one of the *N* preamble repetitions is not cancelled.

4. The method according to claim 1, wherein determining whether to perform the power ramping based on the status of the *N* preamble repetitions comprises:
receiving second indication information sent by a network device, wherein the second indication information indicates that the terminal keeps the power of the PRACH retransmission unchanged in a case where all of the *N* preamble repetitions are cancelled;
determining, based on the second indication information and a case where the *N* preamble repetitions are cancelled, to keep the power of the PRACH retransmission unchanged in a case where all of the *N* preamble repetitions are cancelled.

5. The method according to claim 1, wherein determining whether to perform the power ramping based on the status of the *N* preamble repetitions comprises:
determining that at least one of the *N* preamble repetitions is cancelled based on a first condition, and determining to keep the power of the PRACH retransmission unchanged.

6. The method according to claim 1, wherein determining whether to perform the power ramping based on the status of the *N* preamble repetitions comprises:
determining that *P* transmissions in the *N* preamble repetitions are cancelled based on a first condition, and determining to perform the power ramping of the PRACH retransmission, where *P* is an integer less than or equal to a first value, and the first value is an integer less than *N*; or
determining that *Q* transmissions in the *N* preamble repetitions are cancelled based on a first condition, and determining to keep the power of the PRACH retransmission unchanged, where *Q* is an integer greater than a first value, and the first value is an integer less than *N*.

7. The method according to claim 6, wherein the first value is specified by a protocol or configured by a network device.

8. The method according to any one of claims 5 to 7, wherein the first condition comprises at least one of:
a resource collision;
a reduction in a transmission power caused by a power allocation; or
a transmission cancellation due to a power allocation.

9. The method according to claim 8, wherein the resource collision comprises at least one of:
a preamble transmission and uplink transmissions other than the preamble transmission being scheduled in a same time slot;
an interval between a preamble transmission and uplink transmissions other than the preamble transmission not meeting a specific condition;
a preamble transmission and downlink transmissions other than the preamble transmission overlapping in a time domain in a time division duplex (TDD) band;
a preamble transmission and downlink symbol transmissions other than the preamble transmission overlapping in a time domain in a TDD band; or
for a half-duplex frequency division duplex (HD-FDD) terminal, a preamble transmission and downlink transmissions other than the preamble transmission overlapping in a time domain.

10. The method according to claim 9, wherein the uplink transmissions other than the preamble transmission comprise at least one of:
a physical uplink control channel (PUCCH) transmission;
a physical uplink shared channel (PUSCH) transmission; or
a scheduling request (SR) transmission.

11. The method according to claim 9, wherein the downlink transmissions other than the preamble transmission comprise at least one of:
a physical downlink control channel (PDCCH) transmission;
a physical downlink shared channel (PDSCH) transmission; or
a channel status information-reference signal (CSI-RS) transmission.

12. A power control method, performed by a network device and comprising:
sending first information to a terminal, wherein the first information comprises at least one of:
first indication information, wherein the first indication information indicates that the terminal ramps a power of a physical random access channel (PRACH) repetition in a case where at least one of *N* preamble repetitions is not cancelled;
second indication information, wherein the second indication information indicates that the terminal keeps a power of a PRACH retransmission unchanged in a case where all of *N* preamble repetitions are cancelled; or
configuration information, wherein the configuration information indicates a first value, the first value is used by the terminal to perform a power ramping of a PRACH retransmission in a case where *P* transmissions in *N* preamble repetitions are cancelled based on a first condition, where *P* is less than or equal to the first value, and the first value is an integer less than *N*; or the first value is used by the terminal to keep a power of a PRACH retransmission unchanged in a case where *Q* transmissions in the *N* preamble repetitions are cancelled based on a first condition, where *Q* is greater than the first value, and the first value is an integer less than *N*.

13. The method of claim 12, wherein the first condition comprises at least one of:
a resource collision;
a reduction in a transmission power caused by a power allocation; or
a transmission cancellation due to a power allocation.

14. The method according to claim 13, wherein the resource collision comprises at least one of:
a preamble transmission and uplink transmissions other than the preamble transmission being scheduled in a same time slot;
an interval between a preamble transmission and uplink transmissions other than the preamble transmission not meeting a specific condition;
a preamble transmission and downlink transmissions other than the preamble transmission overlapping in a time domain in a time division duplex (TDD) band;
a preamble transmission and downlink symbol transmissions other than the preamble transmission overlapping in a time domain in a TDD band; or
for a half-duplex frequency division duplex (HD-FDD) terminal, a preamble transmission and downlink transmissions other than the preamble transmission overlapping in a time domain.

15. The method according to claim 14, wherein the uplink transmissions other than the preamble transmission comprise at least one of:
a physical uplink control channel (PUCCH) transmission;
a physical uplink shared channel (PUSCH) transmission; or
a scheduling request (SR) transmission.

16. The method according to claim 14, wherein the downlink transmissions other than the preamble transmission comprise at least one of:
a physical downlink control channel (PDCCH) transmission;
a physical downlink shared channel (PDSCH) transmission; or
a channel status information-reference signal (CSI-RS) transmission.

17. A terminal, comprising:
a processing module configured to determine to perform a physical random access channel (PRACH) transmission with *N* preamble repetitions, where *N* is an integer greater than 1,
wherein the processing module is further configured to determine whether to perform a power ramping of a PRACH retransmission based on a status of the *N* preamble repetitions.

18. A network device, comprising:
a transceiver module configured to send first information to a terminal, wherein the first information comprises at least one of:
first indication information, wherein the first indication information indicates that the terminal ramps a power of a physical random access channel (PRACH) repetition in a case where at least one of *N* preamble repetitions is not cancelled;
second indication information, wherein the second indication information indicates that the terminal keeps a power of a PRACH retransmission unchanged in a case where all of *N* preamble repetitions are cancelled; or
configuration information, wherein the configuration information indicates a first value, the first value is used by the terminal to perform a power ramping of a PRACH retransmission in a case where *P* transmissions in *N* preamble repetitions are cancelled based on a first condition, where *P* is less than or equal to the first value, and the first value is an integer less than *N*; or the first value is used by the terminal to keep a power of a PRACH retransmission unchanged in a case where *Q* transmissions in the *N* preamble repetitions are cancelled based on a first condition, where *Q* is greater than the first value, and the first value is an integer less than *N*.

19. A terminal, comprising:
one or more processors; and
a memory coupled to the one or more processors, and having stored therein instructions that, when executed by the one or more processors, cause the terminal to perform the method according to any one of claims 1 to 11.

20. A network device, comprising:
one or more processors; and
a memory coupled to the one or more processors, and having stored therein instructions that, when executed by the one or more processors, cause the network device to perform the method according to any one of claims 12 to 16.

21. A communication system, comprising:
a terminal configured to perform the method according to any one of claims 1 to 11; and
a network device configured to perform the method according to any one of claims 12 to 16.

22. A storage medium having stored therein instructions that, when run on a communication device, cause the communication device to perform the method according to any one of claims 1 to 11 or any one of claims 12 to 16.
